# EUROPEAN PATENT SPECIFICATION

(11) **EP 4 748 711 B1**
(45) Date of publication and mention of the grant of the patent: **25.11.2026**
(21) Application number: 24425057.7
(22) Date of filing: 26.11.2024
(51) Int. Cl.: B64C 29/00, B64C 39/08, B64C 3/38, B64D 31/09

(54) **CONVERTIBLE AIRCRAFT CAPABLE OF HOVERING**
WANDELBARES, SCHWEBENDES FLUGZEUG
AÉRONEF TRANSFORMABLE CAPABLE DE VOLER EN STATIONNAIRE

(43) Date of publication of application: 27.05.2026
(73) Proprietor: Leonardo S.p.a., 00195 Roma (IT)
(72) Inventor: Bianco Mengotti, Riccardo, 21017 SAMARATE (VA) (IT); Cavanna, Mattia, 21017 SAMARATE (VA) (IT); Sampugnaro, Luca, 21017 SAMARATE (VA) (IT); Caccetta, Luca, 21017 SAMARATE (VA) (IT); Landi, Francesco, 21017 SAMARATE (VA) (IT); Frassoldati, Gregorio, 21017 SAMARATE (VA) (IT)
(74) Representative: Studio Torta S.p.A.

(56) References cited:
- WO-A1-2022/263948
- WO-A1-2023/152746
- US-A1- 2021 024 208
- US-A1- 2021 347 472
- US-A1- 2021 403 161
- US-A1- 2023 348 054

## Description

This invention relates to a convertible aircraft capable of hovering.

In the aviation sector, airplanes are normally used for high cruising speeds, in particular greater than 150 knots and high altitudes, e.g. over 30,000 feet. At high cruising speeds and altitudes, airplanes employ fixed wings to generate the lift necessary to support the aircraft. Sufficient lift can only be achieved by accelerating the airplane on runways of considerable length. These runways are also necessary to allow the airplanes to land.

In contrast, helicopters normally have lower cruising speeds than airplanes and generate the lift required for support through the rotation of the main rotor blades. As a result, helicopters can land/take off without the need for horizontal speed and using very small surfaces. Moreover, helicopters are capable of hover flying at relatively low altitudes and speeds, making them particularly easy to handle and suitable for demanding manoeuvres such as recovering people in the mountains or at sea.

Nevertheless, helicopters have inherent limitations in terms of maximum operational altitude, which is around 6,000 meters (20,000 feet), and maximum operational speed, which typically does not exceed 280 km/h (150 knots).

In order to meet the demand for aircraft capable of the same manoeuvrability and flexibility of use as the helicopter while overcoming the inherent limitations mentioned above, convertiplanes are known, which are a type of convertible aircraft.

An example of a convertiplane is described in patent application US-B-10,011,349.

More specifically, the convertiplane described in the above-mentioned patent essentially comprises:
- a fuselage extending along a first longitudinal axis; and
- a wing extending cantilevered and consisting of a pair of half-wings arranged on respective sides of the fuselage opposite each other and having respective free wing tips opposite the fuselage and aligned along a second transverse axis substantially orthogonal to the first longitudinal axis.

The convertiplane also comprises:
- a pair of nacelles housing the respective motors; and
- a pair of rotors rotatable around respective third axes and operatively connected to respective motors.

The rotors can be tilted with respect to the wing around a fourth axis preferably parallel to the second axis.

Convertiplanes are also able to selectively take:
- the first "helicopter" configuration, in which the rotors are arranged with their respective third axes substantially vertical and orthogonal to the convertiplane's first axis and orthogonal to their respective motors; or
- the second "airplane" configuration, in which the rotors are arranged with their respective third axes substantially parallel to the first axis of the convertiplane and coaxial to their respective motors.

Several proposals for electrically powered convertible aircraft have recently been developed.

Such electrically powered convertible aircraft include, in a nutshell:
- a plurality of wing areas;
- a plurality of mutually independent electric motors driving respective rotors tilted with respect to the fuselage to determine the transition between the "airplane" and "helicopter" configurations;
- a plurality of control surfaces supported by the wing areas; and
- a plurality of first actuators that can be operated to move the control surfaces relative to corresponding wing areas and thus ensure the manoeuvrability of the aircraft in the "airplane" configuration.

Electrically powered convertible aircraft are also known that comprise, in addition:
- a pair of fixed tail fins projecting so as to form a V from a tail end of the fuselage;
- a plurality of movable surfaces supported by the tail fins; and
- a plurality of second actuators that can be operated to move respective movable surfaces relative to corresponding tail fins and thus ensure the manoeuvrability of the aircraft in the second "airplane" configuration.

There is a perceived need in the industry to reduce the number of components of convertible aircraft capable of hovering, while ensuring complete and effective manoeuvrability in all flight conditions.

There is also a perceived need to ensure the manoeuvrability of the aircraft even in the event of rotor failure.

There is also a perceived need to reduce the operational loads on the first and second actuators.

Finally, there is a perceived need to reduce the interference between the airflow generated by the rotors downward and the half-wings when the aircraft is in the first "helicopter" configuration and during the transition between the "helicopter" configuration and the "airplane" configuration.

US-A-2021/347472, US-A-2021/024208, US-A-2021/403161 and WO-A-2023/152746 disclose a known convertible aircraft .

US-A-2023/348054 discloses an aircraft comprising a fuselage; a wing connected to the fuselage; and first and second propulsion systems connected to the wing on opposite sides of the fuselage, wherein at least a portion of each of the first and second propulsion systems and at least a portion of the wing are tiltable between a first position in which the aircraft is in a hover mode and a second position in which the aircraft is in a cruise mode, wherein each of the propulsion systems includes pylon and a rotor assembly comprising a plurality of rotor blades.

The purpose of this invention is to provide a convertible aircraft capable of hovering, which enables at least one of the above requirements to be met in a simple and economical manner.

According to the invention, this purpose is achieved with a convertible aircraft capable of hovering as claimed in claim 1.

To better understand this invention, three preferred, but non-limiting, embodiments of this invention are described below, merely by way of example, and with the aid of the attached figures in which:
- Figure 1 is a perspective view of a first embodiment of a convertible aircraft produced according to the precepts of this invention in a first airplane configuration;
- Figure 2 is a perspective view of the convertible aircraft in Figure 1 in a second helicopter configuration;

- Figures 3 to 6 illustrate respective manoeuvres of the aircraft in Figures 1 and 2 in the first "airplane" configuration and in full operational mode;
- Figures 7 to 10 illustrate respective manoeuvres of the aircraft in Figures 1 and 2 in the first "airplane" configuration and with a first rotor that has broken down;
- Figures 11 to 14 illustrate respective manoeuvres of the aircraft in Figures 1 and 2 in the first "airplane" configuration and with a second rotor that has broken down;
- Figures 15 to 18 illustrate respective manoeuvres of the aircraft in Figures 1 and 2 in the first "airplane" configuration and with a third rotor that has broken down;
- Figures 19 to 22 illustrate respective manoeuvres of the aircraft in Figures 1 and 2 in the first "airplane" configuration and with a first actuator operationally connected to the second rotor that has broken down;
- Figures 23 to 26 illustrate respective manoeuvres of the aircraft in Figures 1 and 2 in the first "airplane" configuration and with a first actuator of the second rotor that has broken down;
- Figures 27 to 30 illustrate respective manoeuvres of the aircraft in Figures 1 and 2 in the first "airplane" configuration and with all the rotors having broken down;
- Figures 31 to 35 illustrate respective manoeuvres of the aircraft in Figures 1 and 2 in the second "helicopter" configuration and in full operational mode;
- Figures 36 to 38 illustrate respective manoeuvres of the aircraft in Figures 1 and 2 in the second "helicopter" configuration and with the first rotor that has broken down;
- Figures 39 to 42 illustrate respective manoeuvres of the aircraft in Figures 1 and 2 in the second "helicopter" configuration and with the second rotor that has broken down;
- Figures 43 to 46 illustrate respective manoeuvres of the aircraft in Figures 1 and 2 in the second "helicopter" configuration and with the third rotor that has broken down;
- Figures 47 to 50 illustrate respective manoeuvres of the aircraft in Figures 1 and 2 in the second "helicopter" configuration and with the first actuator operationally connected to the second rotor that has broken down;
- Figures 51 to 53 illustrate successive steps of an initial procedure to convert the aircraft from Figures 1 to 2 from the first "airplane" configuration to the second "helicopter" configuration;
- Figures 54 to 56 illustrate successive steps of a second procedure to convert the aircraft from Figures 1 to 2 from the second "helicopter" configuration to the second "airplane" configuration;
- Figure 57 is a perspective view of a second embodiment of a convertible aircraft produced according to the precepts of this invention in a first airplane configuration; and
- Figure 58 is a perspective view of a third embodiment of a convertible aircraft produced according to the precepts of this invention in a first airplane configuration.

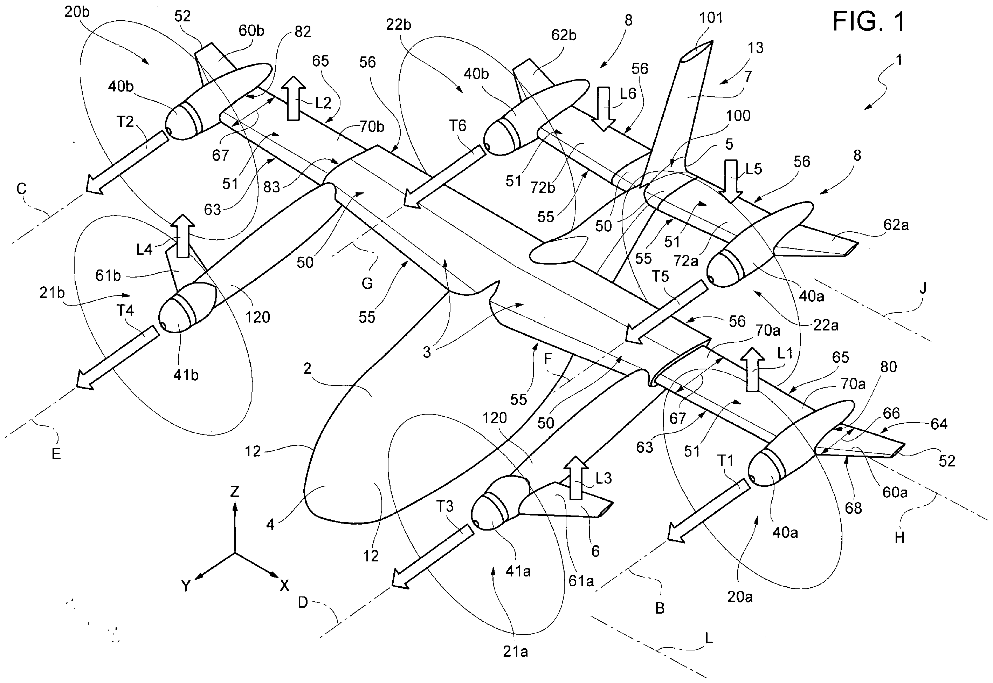

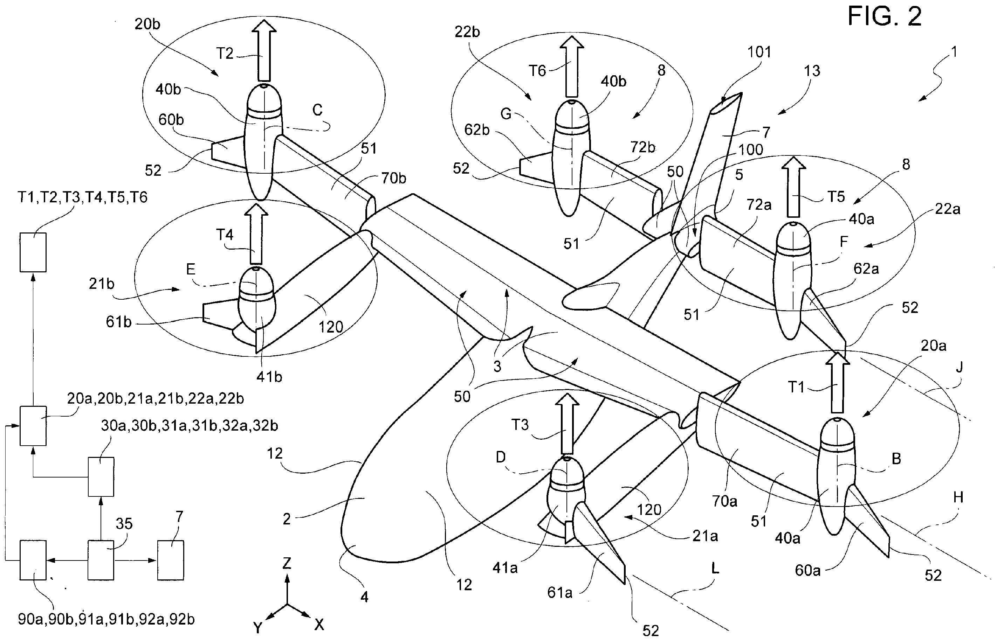

With reference to Figures 1 and 2, reference number 1 indicates a convertible aircraft capable of hovering.

More specifically, the aircraft 1 can be selectively switched between:
- a first configuration (Figure 1), in which it is in a forward flight condition and proceeds along a predominantly horizontal trajectory; and
- a second configuration (Figure 2), in which it performs a hover manoeuvre or advances along a predominantly vertical trajectory.

It should be specified that, below in this description, expressions such as "above", "below", "in front of", "behind" and the like are used with reference to normal conditions of forward flight or "hovering" of the aircraft 1 illustrated in Figure 1.

It is possible to identify a set of three axes integral with the aircraft 1 and originating at a centre of gravity of the aircraft 1 itself consisting of:
- a longitudinal axis Y of the aircraft 1;
- an axis X orthogonal to the axis Y; and
an axis Z orthogonal to the axes X, Y.

The rotations of the aircraft 1 around the axes Y, X, Z define the respective roll, pitch, and yaw manoeuvres in a known way.

The aircraft 1 essentially comprises:
- a fuselage 2 extending along the axis Y and defining a nose 4 and a tail 5 of the aircraft 1; and
- a portion of the tail 13 projecting cantilevered from the tail 5 of the fuselage 2 transversely to it.

In the illustrated embodiment, the aircraft 1 also comprises:
- a pair of half-wings 3 extending cantilevered from their respective opposite sides 12 of the fuselage 2 and transverse to the axis Y, having respective free wing tips 52, and capable of generating respective first lift values to ensure the support of the aircraft 1 in the first configuration; and
- a pair of half-wings 8 comprising respective free wing tips 52, defining respective tail planes, and designed to generate respective negative lift values to provide a desired degree of longitudinal stability of the aircraft 1 in the second configuration.

The tail 13 portion is preferably shaped like a cross and includes, in turn:
- a tail fin 7 provided to provide lateral stability to the aircraft 1 in the second configuration; and
- the half-wings 8, which define respective tail planes and project, cantilevered, from respective opposite sides of the tail fin

In particular, the wingspan, i.e. the distance between the free wing tips 52 and the respective side 12 according to a corresponding longitudinal extension direction of the half-wing 3 is greater than the wingspan of the half-wing 8.

With reference to normal forward flight operating conditions, the aircraft 1 proceeds in a direction oriented from the tail 5 to the nose 4.

The half-wings 3 and 8 extend above the fuselage 2.

The half-wings 3 are interposed along the axis Y between the nose 4 and tail 5.

The aircraft 1 also comprises, in the case illustrated:
- a pair of rotors 20a, 20b supported by their respective half-wings 3 in a rotating manner around their respective axes B, C which can be tilted with respect to the fuselage 2;
- a pair of rotors 21a, 21b that revolve around their respective axes D, E, which can be tilted with respect to the fuselage 2; and
- a pair of rotors 22a, 22b supported by respective half-wings 8 in a rotating manner around their respective axes F, G and which can be tilted with respect to the fuselage 2.

In particular, the axes B, C; D, E; and F, G can be tilted with respect to the fuselage 2 about respective axes H; L; J between respective first positions assumed when the aircraft 1 is in the first "airplane" configuration and respective second positions assumed when the aircraft 1 is in the second "helicopter" configuration.

The axes H; L; J are essentially parallel to the axis X.

The aircraft 1 also comprises, only schematically illustrated in Figure 2:
- a plurality of motors 30a, 30b; 31a, 31b; 32a, 32b operationally connected to respective rotors 20a, 20b; 21a, 21b; 22a, 22b and can be operated to rotate said rotors 20a, 20b; 21a, 21b; 22a, 22b around respective axes B, C; D, E; F, G; and
- a control unit 35 (only schematically illustrated in Figure 2) receiving as input a plurality of control signals provided by the crew, an autopilot, or a remote control system, and programmed to provide as output a plurality of commands to control the rotors 20a, 20b; 21a, 21b; 22a, 22b, so that respective motors 30a, 30b; 31a, 31b; 32a, 32b provide desired values of the relative thrusts T1, T2; T3, T4; T5, T6.

The aircraft 1 also comprises a plurality of nacelles 40a, 40b (41a, 41b) housing respective motors 30a, 30b; 32a, 32b; 31a, 31b and supporting corresponding rotors 20a, 20b; 22a, 22b (21a, 21b).

More specifically, the control unit 35 is programmed to command the rotors 20a, 20b; 21a, 21b; 22a, 22b to generate respective, independent thrusts T1, T2; T3, T4; T5, T6.

More specifically, the control unit 35 is programmed to command the rotors 20a, 20b; 21a, 21b; 22a, 22b to generate respective thrusts T1, T2; T3, T4; T5, T6 having a resultant parallel to the axis Y when the aircraft 1 is in the first "airplane" configuration (Figure 1) and having a resultant parallel to the axis Z when the aircraft 1 is in the second "helicopter" configuration (Figure 2).

The aircraft 1 further comprises a plurality of actuators 90a, 90b, 91a, 91b, 92a, 92b (only schematically illustrated in Figure 2) that can be driven to tilt the axes B, C; D, E and F, G of corresponding rotors 20a, 20b; 21a, 21b; 22a, 22b around corresponding axes H, L, J.

The control unit 35 is programmed to control the actuators 90a, 90b, 91a, 91b, 92a, 92b independently of each other, and to control an angle of incidence of the tail fin 7, based on the control signals provided by the crew, an autopilot, or a remote control system.

In the example illustrated, the motors 30a, 30b; 31a, 31b; 32a, 32b are electrically driven.

In the example illustrated, the rotors 20a, 20b; 21a, 21b; 22a, 22b have a variable pitch.

Alternatively, the motors 30a, 30b; 31a, 31b; 32a, 32b regulate the thrusts T1, T2; T3, T4; T5, T6 by acting only on the angular speed of the rotors 20a, 20b; 21a, 21b; 22a, 22b around the corresponding axes B, C; D, E; F, G.

More specifically, and as will be clear from the following description, the control unit 35 is programmed to receive as input:
- a first signal associated with a desired manoeuvre of the aircraft 1 generated by an autopilot or pilot-operated manual control;
- a second signal associated with a possible failure of one of the rotors 20a, 20b; 21a, 21b; 22a, 22b; and
- a third signal associated with a possible failure of at least one of said actuators 90a, 90b, 91a, 91b, 92a, 92b.

The control unit 35 is also programmed to generate at its output respective control signals for the motors 30a, 30b; 31a, 31b; 32a, 32b currently operational and for the actuators currently operational 90a, 90b, 91a, 91b, 92a, 92b based on said first, second, and third signals in order to execute said manoeuvre.

The axes B, C; D, E and F, G are arranged symmetrically to the axis Y.

Advantageously, the aircraft 1 comprises a plurality of wing areas 60a, 70a; 60b, 70b; 61a; 61b; 70a, 70b; 72a, 72b operationally connected to the respective rotors 20a; 20b; 21a; 21b; 22a, 22b; the wing areas 60a, 70a, 60b, 70b; 61a, 61b; 62a, 62b, 72a, 72b can be tilted with respect to their respective axes H; L; J as a result of the inclination of the respective rotors 20a, 20b; 21a; 21b; 22a, 22b about their respective axes H; L; J independently of each other.

More specifically, each half-wing 3; 8 comprises, in turn:
- a respective root portion 50 attached to the respective side 12 of the fuselage 2; and
- a respective wing tip portion 51 that can be tilted with respect to the root portion 50 about the axis H; J and supporting the respective rotors 20a, 20b; 22a, 22b.

More specifically, each wing tip portion 51 defines the respective free wing tip 52 of the half-wing 3, 8 opposite the fuselage 2.

The rotors 20a, 20b; 22a, 22b can be jointly rotated with the wing tip portions 51 of corresponding half-wings 3; 8 around the axis H; J with respect to the corresponding root portions 50.

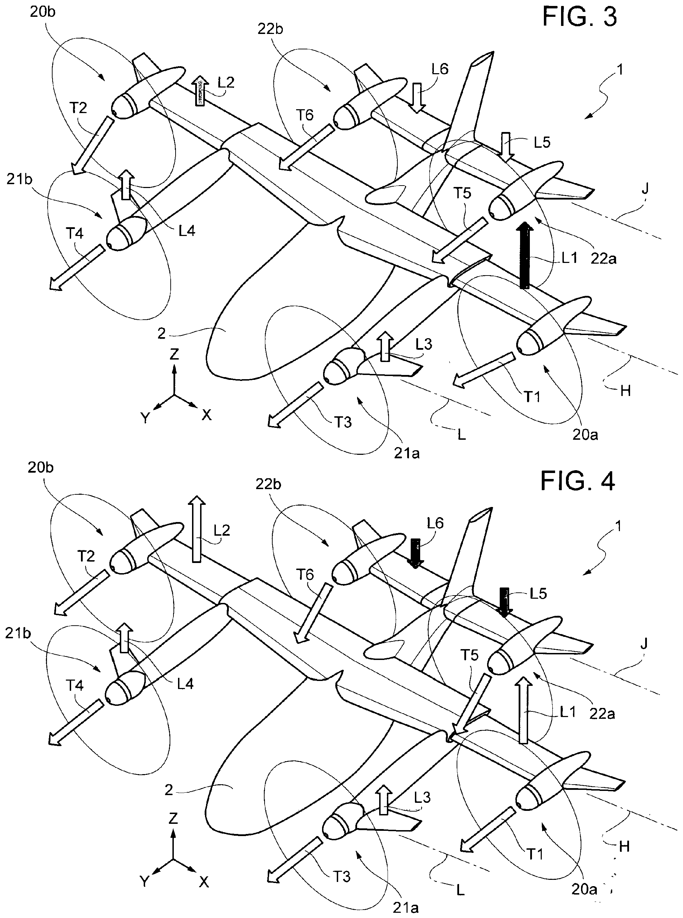

More specifically, the wing tip portion 51 of each half-wing 3; 8 can be tilted with respect to the corresponding root portion 50 about the axis H; J so as to be able to assume a plurality of third positions (described in detail below in this description and with reference to Figures 3 to 30) associated with respective values of an aerodynamic control force generated by the wing area 60a, 60b, 70a, 70b; 62a, 62b, 72a, 72b, when the aircraft 1 is in the first "airplane" configuration.

In each of these third positions, the angle defined between the axis B, C; F, G of the corresponding rotor 20a, 20b; 22a, 22b and the axis Y assumes a respective value between minus twenty and one hundred and ten degrees.

In particular, the above-mentioned angle is measured from the axis Y and towards the corresponding axis B, C; F, G of the corresponding rotor 20a, 20b; 22a, 22b, and assumes a value of ninety degrees when the corresponding axis B, C; D, E is parallel to the axis Z, of zero degrees when the corresponding axis B, C; F, G is parallel to the axis Y and the thrusts T1, T2; T5, T6 are oriented from the tail 5 to the nose 4, and of minus twenty degrees when the corresponding rotor 20a, 20b; 22a, 22b is tilted downward with respect to the fuselage 2.

Each wing area 60a, 60b, 70a, 70b; 62a, 62b, 72a, 72b defines the respective wing tip 52 of the corresponding half-wing 3, 8.

Each nacelle 40a, 40b of the rotor 20a, 20b; 22a, 22b is interposed along its axis H; J between the respective wing area 60a, 60b; 62a, 62b and the corresponding wing area 70a, 70b, 72a, 72b

The root portion 50 of each half-wing 3; 8 comprises, in turn:
- a leading edge 55; and
- a trailing edge 56.

Each wing area 60a, 60b, 70a, 70b; 61a, 62b, 72a, 72b includes, in turn:
- a corresponding leading edge 68; 63;
- a corresponding trailing edge 64; 65; and
- a corresponding chord 66; 67 extending between the respective leading edges 68; 63 and the corresponding trailing edges 64, 65.

The wing area 60a, 60b; 62a, 62b of each half-wing 3, 8 also comprises, proceeding parallel to an extension direction of the half-wing 3, 8:
- a wing tip 80 extending between the leading edge 68 and the trailing edge 64 and lying on the side of the root portion 50; and
- the free wing tip 52 extending between the leading edge 68 and the trailing edge 64, and opposite the wing tip 80.

Similarly, the wing area 70a, 70b; 72a, 72b of each half-wing 3, 8 comprises, proceeding parallel to an extension direction of the half-wing 3, 8:
- a wing tip 82 extending between the leading edge 63 and the trailing edge 65 and lying on the side of the wing area 60a, 60b; 62a, 62b; and
- a wing tip 83 extending between the leading edge 63 and the trailing edge 65, opposite the wing tip 82 and lying on the side of the corresponding root portion 50.

Each nacelle 40a, 40b is interposed along the axis H; J between the wing tip 82 of the corresponding wing area 70a, 70b; 72a, 72b and the wing tip 80 of the corresponding wing area 60a, 60b; 62a, 62b.

The chord 66 lengths of each wing area 60 progressively increase from a minimum value to a maximum value, proceeding from the corresponding wing tip 52 towards the corresponding wing tip 80.

The chord 67 lengths of the wing area 70a, 70b; 72a, 72b are greater than the maximum chord 66 lengths of the wing area 60a, 60b; 62a, 62b.

In particular, the leading edge 68 of the wing area 60a, 60b; 62a, 62b of each half-wing 3 and 8 extends partly in front of and partly behind the axis H; J in the first "airplane" configuration of the aircraft 1.

The trailing edge 64 of the wing area 60a, 60b; 62a, 62b of each half-wing 3; 8 extends completely behind the axis H; J in the first "airplane" configuration of the aircraft 1.

The leading edges 63 and trailing edges 65 of the wing areas 61 define an extension of the leading edges 55 and trailing edges 56, respectively, of the corresponding half-wings 3; 8 in the airplane configuration of the aircraft 1, as illustrated in Figure 2.

The leading edge 68 of each wing area is tapered with respect to the axis Z proceeding from the respective wing tip 80 towards the corresponding wing tip 52, when the aircraft 1 is in the second "helicopter" configuration.

The tail fin 7 comprises a wing tip edge 100 and another wing tip edge 101 opposite each other. The wing tip edges 100, 101 extend parallel to the axis Y and are spaced apart from each other parallel to the axis Z.

The wing tip edge 101 is arranged above the wing tip edge 100, with reference to the normal forward direction of the aircraft 1.

The wing tip edge 101 is free in the example illustrated.

The root portions 50 of the half-wings 8 project, cantilevered, from the respective wing tip edges 100 of the tail fin 7.

The aircraft 1 also includes a pair of beams 120 projecting, cantilevered, from the half-wing 3 parallel to the axis Y and towards the nose 4 of the fuselage 2.

The fuselage 2 is interposed along the axis X between the beams 120.

The beams 120 support respective nacelles 41a, 41b of respective rotors 21a, 21b so they can be tilted around the corresponding axis L.

The nacelles 41a, 41b preferably have respective wing areas 61a, 61b very similar to the wing areas 60a, 60b, 62a, 62b.

The wing areas 61a, 61b project, cantilevered, from their respective nacelles 41a, 41b on the opposite side of the fuselage 2.

The nacelles 41a, 41b can be jointly tilted with their respective rotors 22a, 22b and wing areas 61a, 61b around the axis L.

In the example illustrated, the axes H; L; J are parallel to the axis X.

In particular, in the second configuration of the aircraft 1, the axes D, E are interposed between the axes B, C and axes F, G, parallel to the axis X.

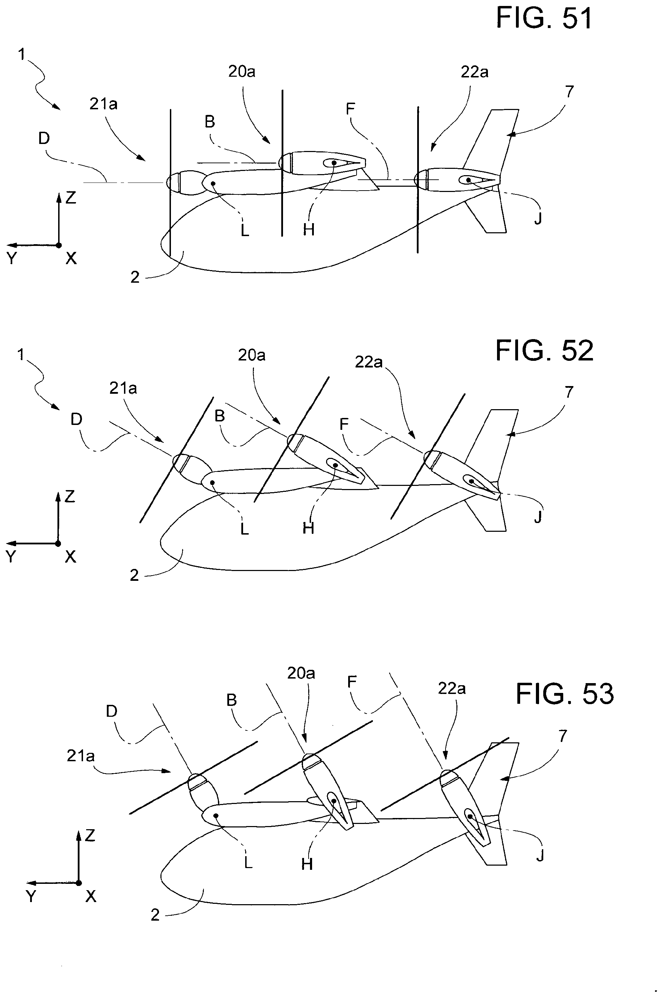

In the first configuration of the aircraft 1, the axes B, C, D, E, F, G are arranged above the fuselage 2. More precisely, the axes B, C are arranged above the axes D, E; F, G, which are arranged at the same height (Figure 51).

More specifically, the wing areas 60a, 70a; 60b, 70b of respective half-wings 3 generate respective lift values L1; L2 and respective aerodynamic resistances R1; R2 in "trimmed" flight, i.e. under conditions of uniform, straight-line motion at a desired forward speed.

The wing areas 62a, 72a; 62b, 72b of respective half-wings 8 generate respective negative lift values L5; L6 and respective aerodynamic resistances R5; R6 in trimmed flight.

The wing areas 61a; 61b generate respective negative lift values L3; L4 and respective aerodynamic resistances R3; R4 in trimmed flight.

The operation of the aircraft 1 is described below starting from a condition in which it is in the first "airplane" configuration in which the axes B, C, D, E, F, G of the rotors 20a, 20b, 21a, 21b, 22b, 22c are parallel to the axis Y. The motors 30a, 30b, 31a, 31b, 32b, 32c independently drive the respective rotors 20a, 20b, 21a, 21b, 22b, 22c. The resultant of the respective thrusts T1, T2, T3, T4, T5, T6 is also parallel to the axis Y and causes the aircraft 1 to move forward at a speed sufficient to allow the half-wings 3 to generate lift along the axis Z directed upwards and sufficient to ensure the support of the aircraft 1 in flight.

The half-wings 8 generate respective negative lift values directed along the axis Z, which ensure the longitudinal stability of the aircraft 1.

If it is necessary to put the aircraft 1 in the second "helicopter" configuration, for example in order to perform a landing manoeuvre, the actuators 90a, 90b, 91a, 91b, 92a, 92b are driven to determine the inclination of the wing tip portions 51 of the half-wings 3, of the nacelles 41a, 41b, and of the wing tip portions 51 of the half-wings 8 around the relative axes H, L, J until the axes B, C, D, E, F, G of the rotors 20a, 20b; 21a, 21b; 22b, 22c are arranged parallel to the axis Z. In this condition, the resultant of the thrusts T1, T2, T3, T4, T5, T6 generated by the rotors 20a, 20b, 21a, 21b, 22b, 22c is parallel to the axis Z and enables the support of the aircraft 1 in flight.

More specifically and with reference to Figures 51 to 53, during the conversion of the aircraft 1 from the second "helicopter" configuration to the first "airplane" configuration, the control unit 35 controls the actuators 90a, 90b, 91a, 91b, 92a, 92b so as to progressively tilt the axes B, C; D, E and F, G of the rotors 20a, 20b, 21a, 21b, 22b, 22c by the same angle about the relative axes H, L, J.

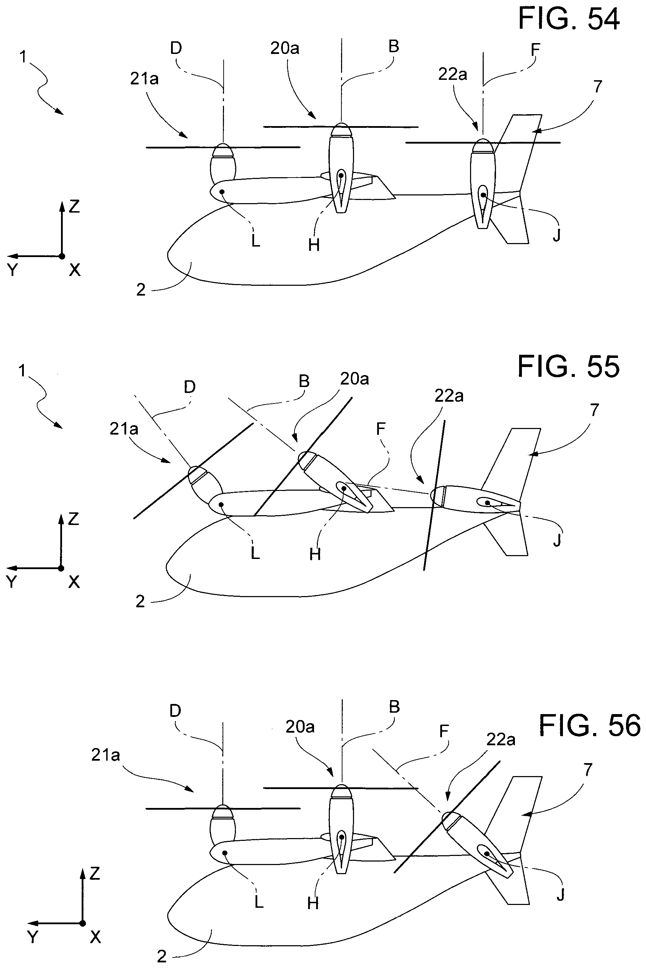

Alternatively and with reference to Figures 54 to 56, the conversion of the aircraft 1 from the first "airplane" configuration to the second "helicopter" configuration, occurs by progressively tilting the axes B, C; D, E and F, G of the rotors 20a, 20b, 21a, 21b, 22b, 22c by various angles about the relative axes H, L, J.

For example, the control unit 35 controls the actuators 90a, 90b, 91a, 91b, 92a, 92b so as to:
- keep the axes B, C; D, E of the rotors 20a, 20b; 21a, 21b parallel to the axis Z and arrange the axes F, G of the rotors 22a, 22b inclined at an acute angle with respect to the axis Y (Figure 55); and
- progressively tilt the axes B, C; D, E; F, G of the rotors 20a, 20b; 21a, 21b; 22a, 22b by different acute angles (Figure 56).

With particular reference to Figures 3 to 30, the methods according to which the control unit 35 adjusts the pitch, roll, and yaw angles of the aircraft 1 in the first "airplane" configuration under different operating conditions of the motors 30a, 30b, 31a, 31b, 32a, 32b are illustrated.

These methods are illustrated starting from a condition in which the thrust values T1, T2, T3, T4, T5, T6 of the respective rotors 20a, 20b, 21a, 21b, 22a, 22b, the lift values L1; L2; L3; L4, the negative lift values L5; L6, and the aerodynamic resistances R1; R2; R3; R4; R5; R6 of the wing areas 60a, 70a; 60b, 70b; 61a, 61b; 62a, 72a; 62b, 72b jointly determine with the lift, negative lift, and aerodynamic resistances generated by the root portions 50 of the half-wings 3, 8 a condition of "trimmed" flight of the aircraft 1, i.e., of uniform, straight motion at a given speed, and are indicated by white arrows in the attached figures.

The lift L1, L2, L3, L4, negative lift L5, L6 and aerodynamic resistances R1, R2, R3, R4, R5, R6 that are increased (decreased) with respect to "trimmed" flight are shown, respectively, in dark (light) grey in the attached figures.

More specifically, in "trimmed" flight, the thrusts T1, T2; T3, T4; T5, T6, the lift L1; L2 generated by the respective wing areas 60a, 70a; 60b, 70b, the lift L3; L4 generated by the respective wing areas 61a; 61b, and the negative lift L5, L6 generated by the respective wing areas 62a, 72a; 62b, 72b are equal to each other and directed parallel to the axis Z.

In Figures 3 to 30, the additional thrusts T1, T2; T3, T4; T5, T6, lift L1, L2, L3, L4, and negative lift L5, L6 in relation to the corresponding values attained in "trimmed" flight are indicated by respective dark-coloured, solid arrows.

With reference to Figures 3 to 6, the methods according to which the control unit 35 adjusts the pitch, roll, and yaw angles of the aircraft 1 in the first configuration and with all the motors 30a, 30b; 31a, 31b; 32a, 32b and actuators 90a, 90b; 91a, 91b; 92a, 92b operational are described below.

If it is necessary to adjust the roll angle of the aircraft 1 about the axis Y (Figure 3), the control unit 35 controls the actuators 90a, 90b so as to tilt the wing tip portions 51 of the half-wing 8 about the axis H by different angles. Consequently, the angles of incidence of the wing areas 60a, 70a; 60b, 70b assume different values with respect to each other and the respective lifts L1 and L2 have different components parallel to the axis Z, the difference of which generates a moment on the aircraft of the axis Y.

With particular reference to Figure 4, if it is necessary to adjust the pitch angle around the axis X, the control unit 35 controls the actuators 92a, 92b, so as to increase (decrease) the angles of incidence of the wing areas 62a, 72a; 62b, 72b by the same value. Consequently, the negative lifts L5, L6 increase (decrease) by the same value, so that the nose 4 is raised (lowered) in relation to the tail 5.

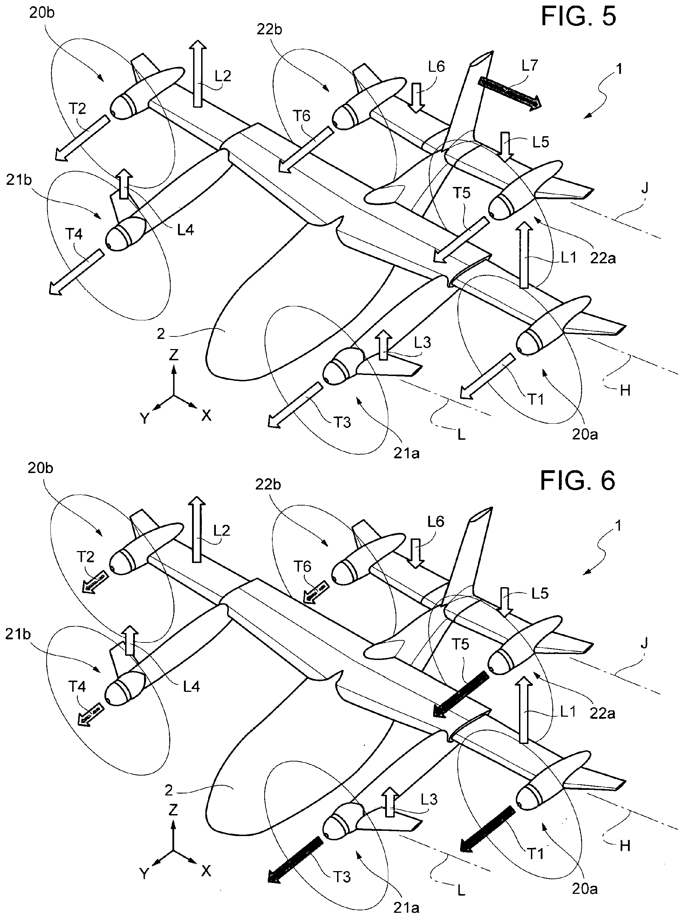

With particular reference to Figures 5 and 6, if the yaw angle around the axis Z needs to be adjusted, the control unit 35:
- acts on the tail fin 7 so as to generate a force L7 having a principal component parallel to the axis Y (Figure 5), thus generating a moment about the axis Z; or
- increases (decreases) the thrusts T1, T3, T5 of the respective rotors 20a, 21a, 22a and decreases (increases) the thrusts T2, T4, T6 of the respective rotors 20b, 21b, 22b, so as to generate a moment about the axis Z (Figure 6).

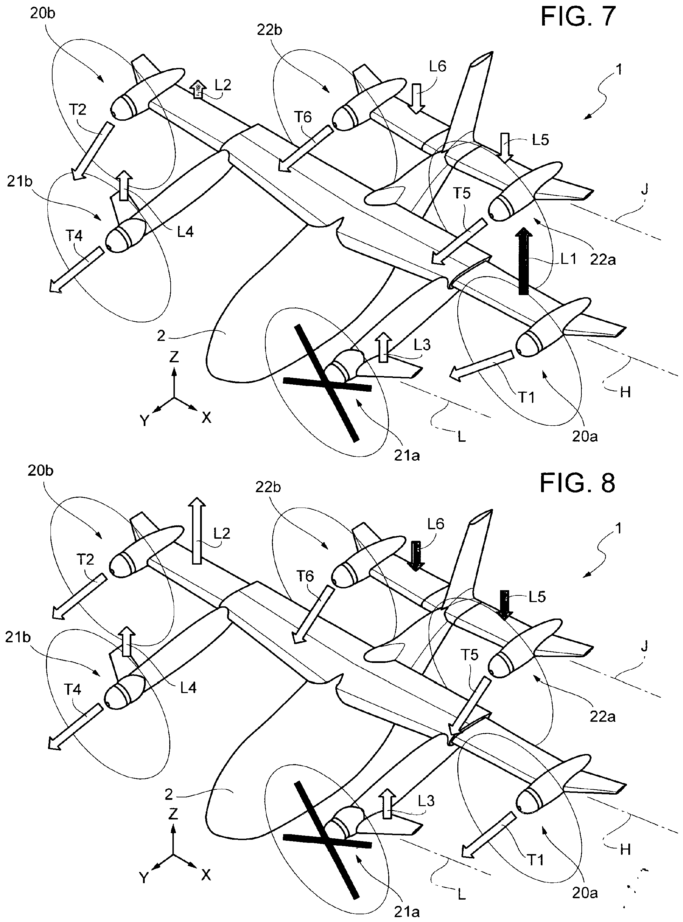

With reference to Figures 7 to 10, the methods according to which the control unit 35 adjusts the pitch, roll, and yaw angles of the aircraft 1 in the first configuration with the motor 31a broken down and, as a result, the corresponding rotor 21a inactive, are described below.

If it is necessary to adjust the roll angle of the aircraft 1 about the axis Y (Figure 7), the control unit 35 controls the actuators 90a, 90b so as to tilt the wing tip portions 51 of the half-wings 3 differently about the axis H. Thus, the angles of incidence of the wing areas 60a, 70a; 60b, 70b are different to each other and, consequently, the respective lifts L1, L2 are different to each other. This difference in lift generates a moment around the axis Y, without affecting the moduli of the thrusts T1, T2, T3, T4, T5, T6.

If it is necessary to adjust the pitch angle of the aircraft 1 around the axis X (Figure 8), the control unit 35 controls the actuators 92a, 92b, so as to increase (decrease) the angles of incidence of the wing areas 62a 72a; 62b, 72b by the same value. Consequently, the negative lifts L5, L6 increase (decrease) by the same value, so that the nose 4 is raised (lowered) in relation to the tail 5.

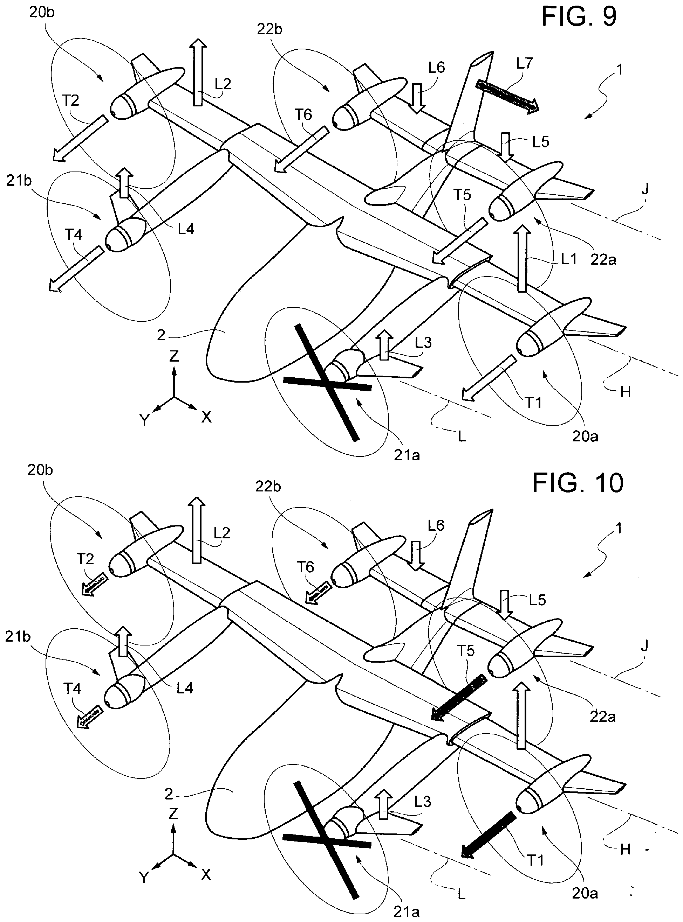

If it is necessary to adjust the yaw angle of the aircraft 1 around the axis Z (Figures 9 and 10), the control unit 35:
- acts on the tail fin 7 so as to generate a force L7 having a principal component parallel to the axis Y (Figure 9); or
- increases (decreases) the thrusts T2, T4, T6 of the respective rotors 20b, 21b, 22b and decreases (increases) the thrusts T3, T5 of the respective rotors 20a, 22a (Figure 10) .

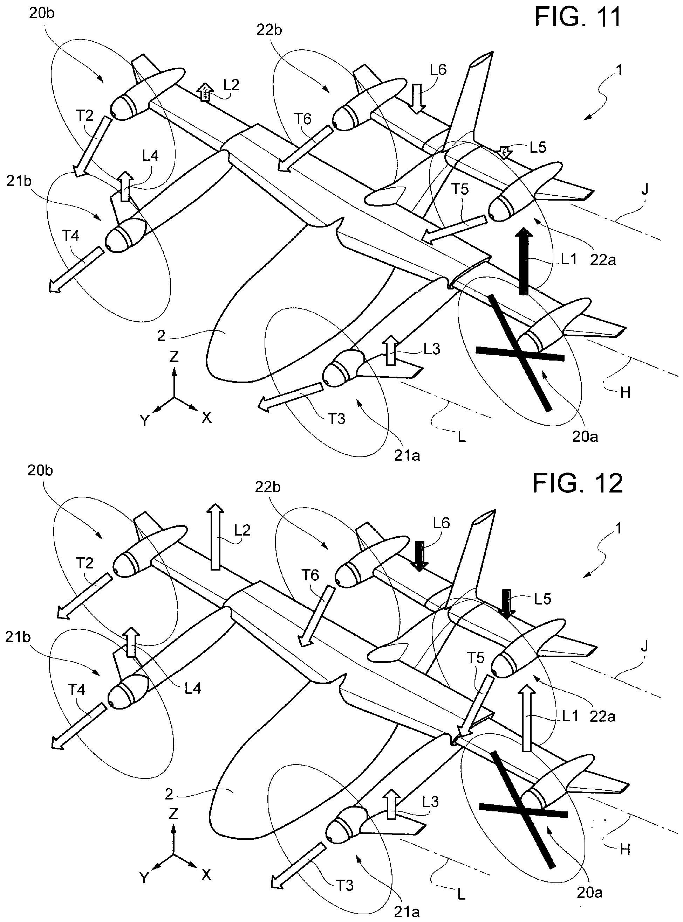

With reference to Figures 11 to 14, the methods according to which the control unit 35 adjusts the pitch, roll, and yaw angles of the aircraft 1 in the first configuration with the motor 30a broken down and, as a result, the corresponding rotor 20a inactive, are described below.

If it is necessary to adjust the roll angle of the aircraft 1 about the axis Y (Figure 11), the control unit 35 controls the actuators 90a, 90b, 92a so as to:
- tilt the wing tip portions 51 of the half-wings 3 at different angles about the axis H. Thus, the angles of incidence of the wing areas 60a, 70a; 60b, 70b respectively increase (decrease) and decrease (increase) and consequently the lift L1 is greater than (less than) the lift L2; and
- tilt the wing tip portion 51 of the half-wing 8 supporting the rotor 22a so as to reduce (increase) the angle of incidence of the wing areas 62a, 72a so as to reduce (increase) the negative lift L5.

These differences between the lifts L1, L2 and negative lifts L5, L6 generate a moment around the axis Y, without affecting the moduli of the thrusts T1, T2, T3, T4, T5, T6.

If it is necessary to adjust the pitch angle of the aircraft 1 around the axis X (Figure 12), the control unit 35 controls the actuators 92a; 92b, so as to tilt the wing tip portions 51 by the same angle around the axis J and to change the angles of incidence of the wing areas 62a, 72a; 62b, 72b by the same value. As a result, the negative lifts L5, L6 increase (decrease) by the same value, thus generating a moment around the axis X on the aircraft 1.

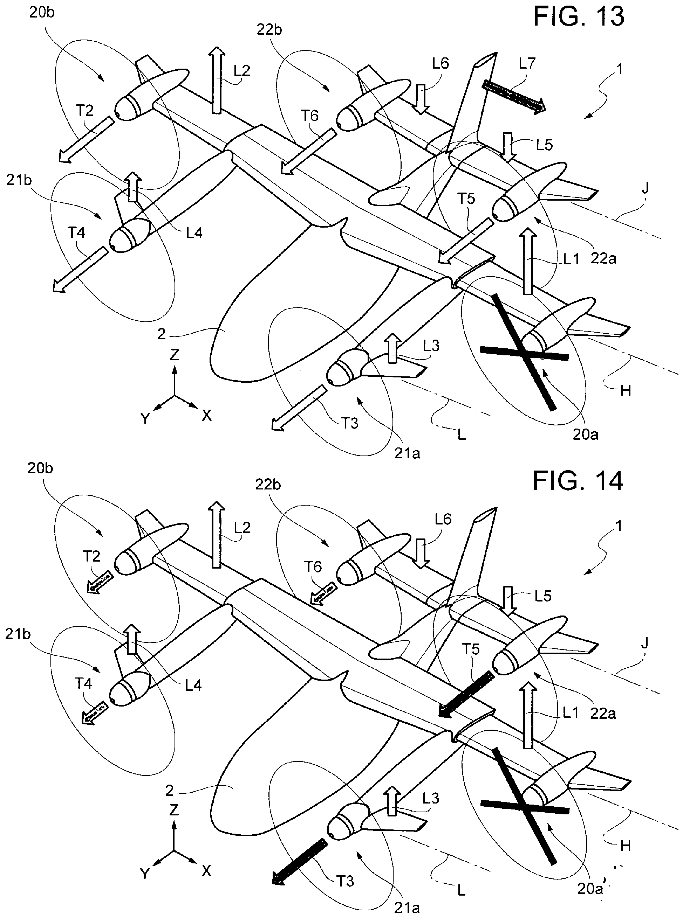

If it is necessary to adjust the yaw angle of the aircraft 1 around the axis Z, the control unit 35:
- acts on the tail fin 7 so as to generate a force L7 having a principal component parallel to the axis Y and directed by the tail fin 7 towards the rotor 21a (21b) (Figure 13); or
- increases (decreases) the thrusts T3, T5 of the respective rotors 21a, 22a and decreases (increases) the thrusts T2, T4, T6 of the respective rotors 20b, 21b, 22b (Figure 14).

Thus, a moment that acts on the aircraft 1 around the axis Z is generated.

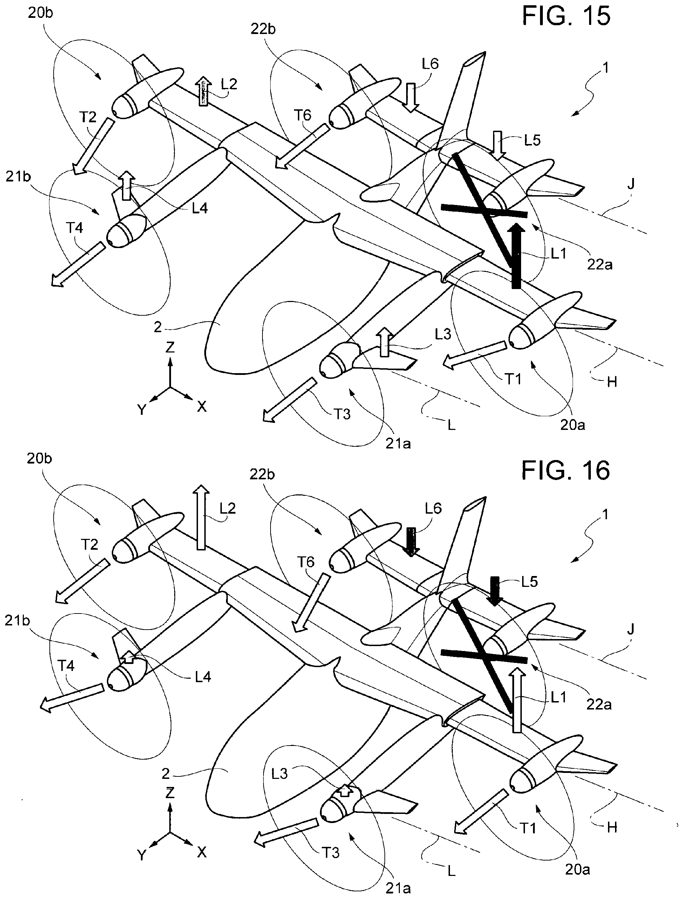

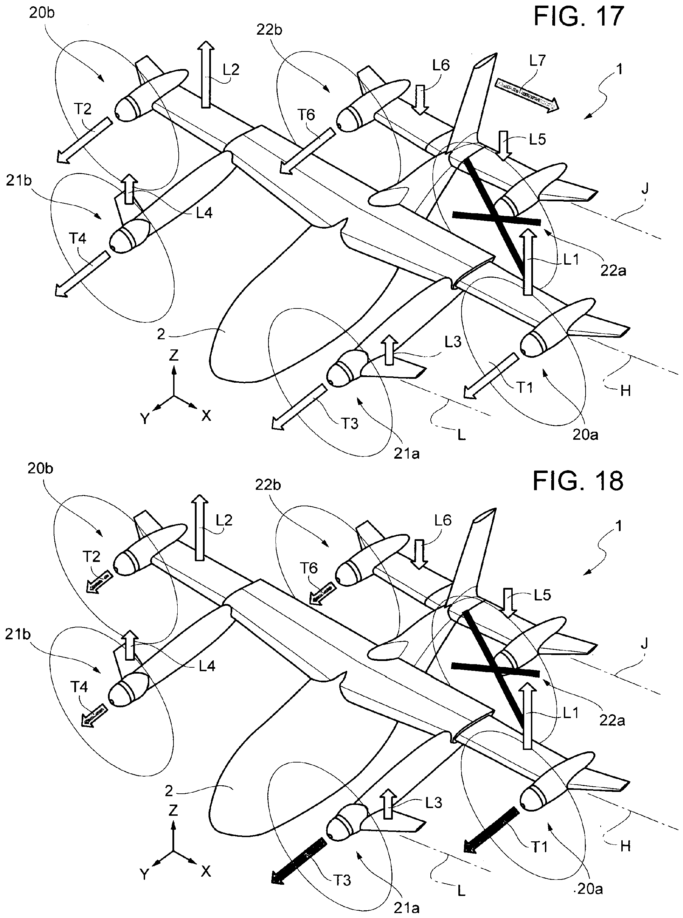

With reference to Figures 15 and 18, the methods according to which the control unit 35 adjusts the pitch, roll, and yaw angles of the aircraft 1 in the first configuration with the motor 32a broken down and, as a result, the corresponding rotor 22a inactive, are described below.

If it is necessary to adjust the roll angle of the aircraft 1 about the axis Y (Figure 15), the control unit 35 controls the actuators 90a; 90b so as to tilt the wing tip portions 51 of the half-wings 8 by different angles about the axis H. Thus, the corresponding wing areas 60a, 70a; 60b, 70b have different angles of incidence between them and generate different lift L1, L2 values. These different lift L1, L2 values create a moment around the axis Y on the aircraft 1.

If it is necessary to adjust the pitch angle of the aircraft 1 around the axis X (Figure 16), the control unit 35 controls the actuators 92a; 92b so as to tilt the wing tip portions 51 by the same angle around the axis J and to change the angles of incidence of the wing areas 62a, 72a; 62b, 72b by the same value. As a result, the negative lifts L5, L6 increase (decrease) by the same value, thus generating a moment around the axis X on the aircraft 1.

If it is necessary to adjust the yaw angle of the aircraft 1 around the axis Z, the control unit 35:
- acts on the tail fin 7 so as to generate a force L7 having a principal component parallel to the axis Y and directed by the tail fin 7 towards the rotor 21a (21b) (Figure 17), so as to generate a moment on the aircraft 1 around the axis Z; or
- controls the motors 30a, 31a; 30b, 31b, 32b in such a way as to increase (decrease) the thrusts T1, T3 of the respective rotors 20a, 21a and decrease (increase) the thrusts T2, T4, T6 of the respective rotors 20b, 21b, 22b (Figure 18), so as to generate a moment on the aircraft 1 about the axis Z without acting on the inclination of the wing areas 60a, 70a; 60b, 70b; 61a, 61b; 62a, 70a; 62b, 72b.

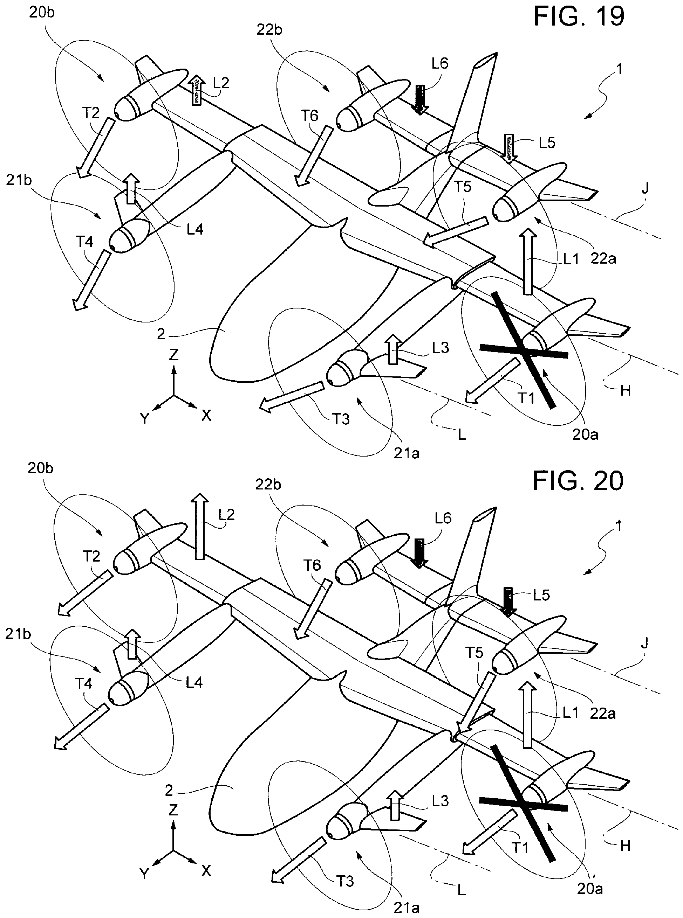

With reference to Figures 19 to 22, the methods according to which the control unit 35 adjusts the pitch, roll, and yaw angles of the aircraft 1 in the first "airplane" configuration with the actuator 90a broken down, but with the motor 30a running, are described below. In this condition, the control unit 35 is able to adjust the thrust T1 of the rotor 20a, but is unable to vary the angles of incidence of the wing areas 60a, 70a and adjust the resulting lift L1 value.

If it is necessary to adjust the roll angle of the aircraft 1 about the axis Y (Figure 19), the control unit 35 controls the actuators 92a, 92b, 90b so as to tilt the wing tip portions 51 of the half-wings 8 and the wing tip portion 51 of the half-wing 3 supporting the rotor 20b. More specifically, the actuators 90b, 92a reduce (increase) the angles of incidence of the wing areas 60b, 70b; 62a, 72a and the actuator 92b increases (reduces) the angle of incidence of the wing area 62b, 72b. Consequently, the negative lift L6 increases (decreases), the negative lift L5 decreases (increases), and the lift L2 decreases (increases), resulting in a momentum around the axis Y on the aircraft 1.

If it is necessary to adjust the pitch angle of the aircraft 1 around the axis X (Figure 20), the control unit 35 controls the actuators 92a, 92b so as to tilt the wing tip portions 51 of the half-wings 8 by the same angle and increase (reduce), as a result, the angles of incidence of the wing areas 62a, 72a; 62b, 72b by the same value. This causes an increase (a reduction) in the negative lifts L5, L6 and generates a moment around the axis X on the aircraft 1.

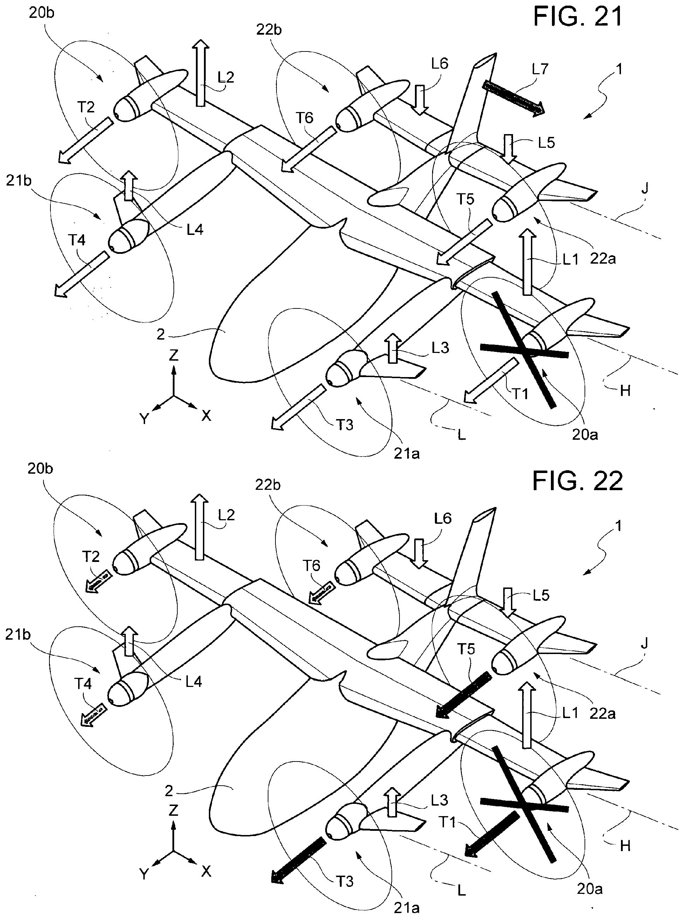

If it is necessary to adjust the yaw angle of the aircraft 1 around the axis Z, the control unit 35:
- acts on the tail fin 7 so as to generate a force L7 having a principal component parallel to the axis Y and directed towards the rotor 21a (21b) (Figure 21), so as to generate a moment on the aircraft 1 around the axis Z (Figure 22); or
- controls the motors 30a, 31a, 32a, 30b, 31b, 32b, so as to increase (decrease) the thrusts T1, T3, T5 of the respective rotors 20a, 21a, 22a and decreases (increases) the thrusts T2, T4, T6 of the respective rotors 20b, 21b, 22b, so as to generate a moment on the aircraft 1 about the axis Z (Figure 22).

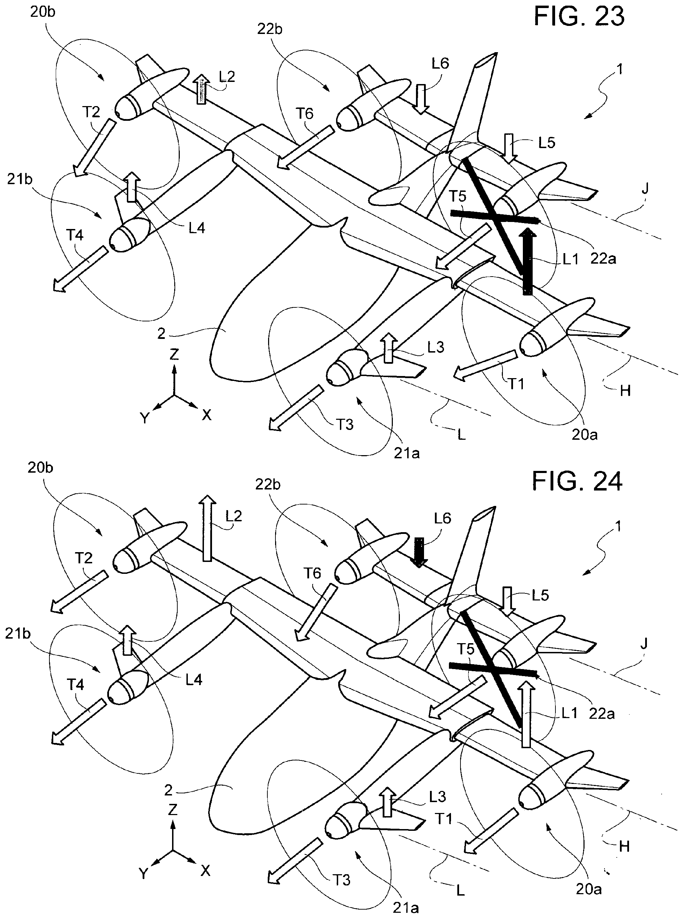

With reference to Figures 23 to 26, the methods according to which the control unit 35 adjusts the pitch, roll, and yaw angles of the aircraft 1 in the first "airplane" configuration with the actuator 92a broken down, but with the motor 32a running, are described below. In this condition, the control unit 35 is able to adjust the thrust T5 of the rotor 22a, but is unable to vary the angles of incidence of the wing areas 62a, 72a and adjust the resulting negative lift L5 value.

If it is necessary to adjust the roll angle of the aircraft 1 about the axis Y (Figure 23), the control unit 35 controls the actuators 90a, 90b so as to tilt the wing tip portions 51 of the half-wings 8. More specifically, the actuator 90a increases (reduces) the angle of incidence of the wing areas 60a, 70a and the actuator 90b reduces (increases) the angles of incidence of the wing areas 62b, 72b. Consequently, the lift L1 increases (decreases) and the lift L2 decreases (increases), resulting in a moment around the axis Y on the aircraft 1.

If it is necessary to adjust the pitch angle of the aircraft 1 about the axis X (Figure 24), the control unit 35 controls the actuator 92b so as to tilt the wing tip portion 51 of the half-wing 8 supporting the rotor 22b. More specifically, the actuator 92b increases (reduces) the angle of incidence of the wing areas 62b, 72b. This causes an increase (a reduction) in the negative lift L6 and generates a moment around the axis X on the aircraft 1.

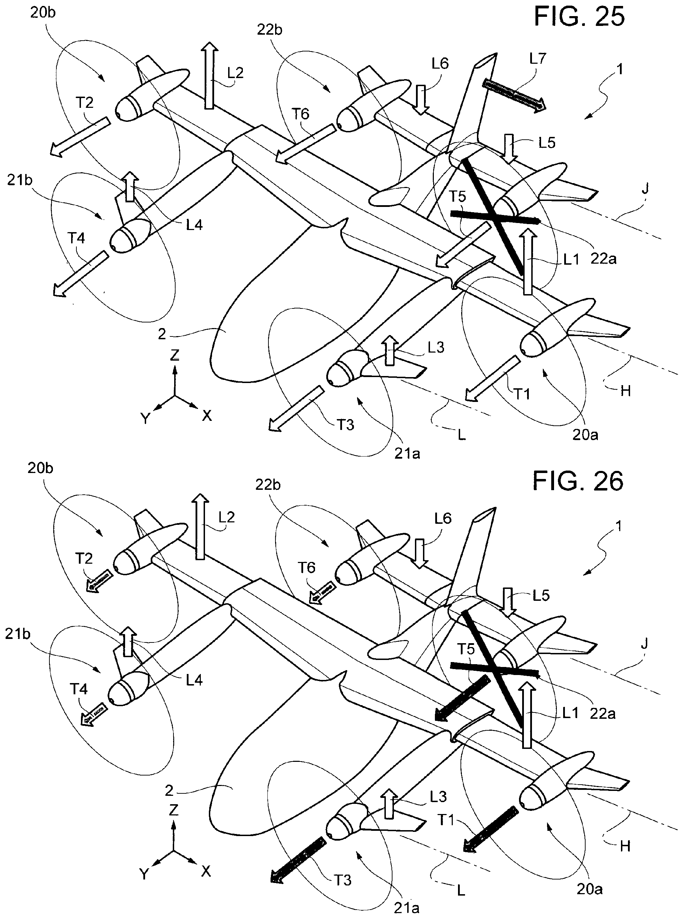

If it is necessary to adjust the yaw angle of the aircraft 1 around the axis Z, the control unit 35:
- acts on the tail fin 7 so as to generate a force L7 having a principal component parallel to the axis Y and directed towards the rotor 21a (21b) (Figure 25), so as to generate a moment on the aircraft 1 around the axis Z; or
- controls the motors 30a, 31a, 32a, 30b, 31b, 32b so as to increase (decrease) the thrusts T1, T3, T5 of the respective rotors 20a, 21a, 22a and decrease (increase) the thrusts T2, T4, T6 of the respective rotors 20b, 21b, 22b, so as to generate a moment on the aircraft 1 about the axis Z (Figure 26).

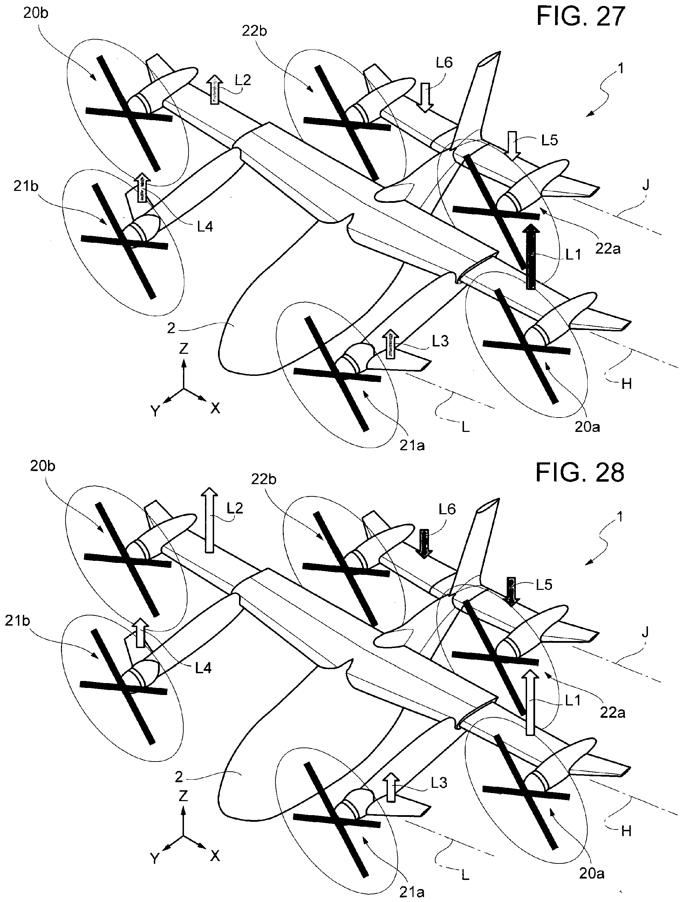

With reference to Figures 27 to 30, the methods according to which the control unit 35 adjusts the pitch, roll, and yaw angles of the aircraft 1 in the first "airplane" configuration and with all the rotors 20a, 20b; 21a, 21b; 22a, 22b broken down are described below.

If it is necessary to adjust the roll angle of the aircraft 1 about the axis Y (Figure 27), the control unit 35 controls the actuators 90a; 90b so as to:
increase (reduce) the angle of incidence of the wing areas 60a; 70a and the lift L1, and increase (reduce) the angle of incidence of the wing areas 60b; 70b and the lift L2.

As a result, the difference between the lifts L1, L2 generates a moment around the axis Y.

If it is necessary to adjust the pitch angle of the aircraft 1 around the axis X (Figure 28), the control unit 35 controls the actuators 90a; 90b, so as to increase (decrease) the angles of incidence of the wing areas 62a; 72a and 62b; 72b by the same value. As a result, the negative lifts L5, L6 increase (decrease) by the same value, thus generating a moment around the axis X acting on the aircraft 1.

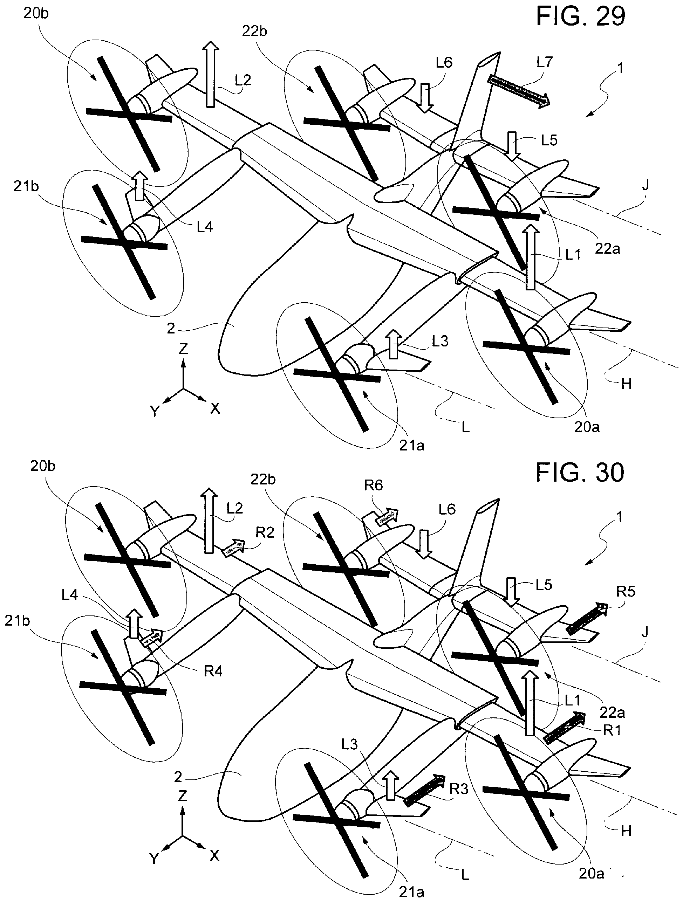

If it is necessary to adjust the yaw angle of the aircraft 1 around the axis Z, the control unit 35:
- acts on the tail fin 7 so as to generate a force L7 having a principal component parallel to the axis Y (Figure 29) and directed towards the rotor 22a; or
- checks the actuators 90a, 90b; 91a, 91b; 92a, 92b so that the wing areas 60a, 70a; 61a; 62a, 72a present a first angle of incidence and the wing areas 60b, 70b; 61b; 62b, 72b present a second angle of incidence. Consequently, the wing areas 60a, 70a; 61a; 62a, 72a generate respective aerodynamic resistances R1; R2; R5 whose sum is different from the sum of the aerodynamic resistances R4; R2; R6 generated by the wing areas 60b, 70b; 61b; 62b, 72b. This difference results in a moment on the aircraft 1 around the axis Z (Figure 30).

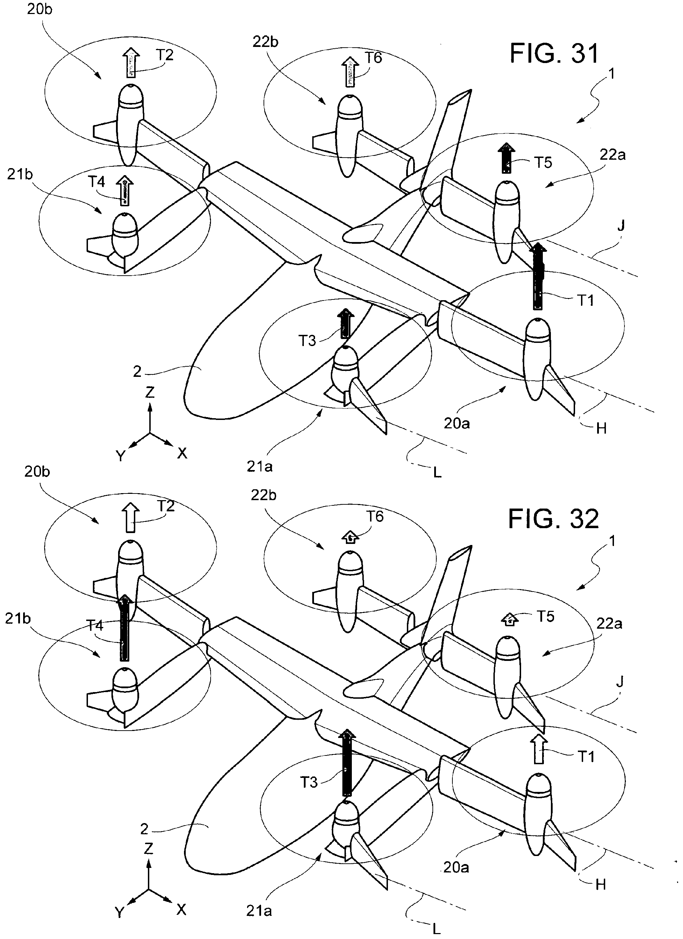

With particular reference to Figures 31 to 50, the methods according to which the control unit 35 adjusts the pitch, roll, and yaw angles of the aircraft 1 in the second "helicopter" configuration are illustrated below.

In this second "helicopter" configuration, the axes B, C, D, E, F, G are parallel to the axis Z and the thrust values T1, T2, T3, T4, T5, T6 of the respective rotors 20a, 20b, 21a, 21b, 22a, 22b balance the weight of the aircraft 1.

The lifts L1, L2, L3, L4 and the negative lifts L5, L6 are essentially zero.

More specifically and with reference to Figures 31 to 35, the methods according to which the control unit 35 adjusts the pitch, roll, and yaw angles of the aircraft 1 in the second configuration and with all the motors 30a, 30b, 31a, 31b, 32a, 32b operational are described below.

If it is necessary to adjust the roll angle of the aircraft 1 about the axis Y, the control unit 35 controls the motors 30a, 30b, 30c, 30d, 30e, 30f, so as to increase (decrease) the thrusts T1, T3, T5 and to decrease (increase) the thrusts T2, T4, T6 of the rotors 20b, 21b, 22b, so as to generate a moment on the aircraft 1 about the axis Y (Figure 31).

In particular, the control unit 35 controls the motors 30a, 30b, 30c, 30d, 30e, 30f so that the resultant of the thrusts T1, T2, T3, T4, T5, T6 is zero, so as not to generate a yaw angle variation around the axis Z of the aircraft 1.

With particular reference to Figure 32, if it is necessary to perform a pitch manoeuvre about the axis Y, the control unit 35 controls the motors 30a, 30b, 30c, 30d, 30e, 30f so as to increase (decrease) the thrusts T3, T4 of the rotors 21a, 21b and to decrease (increase) the thrusts T5, T6 of the rotors 22a, 22b, so as to generate a moment on the aircraft 1 about the axis X that raises (or lowers) the nose 4 with respect to the tail 5.

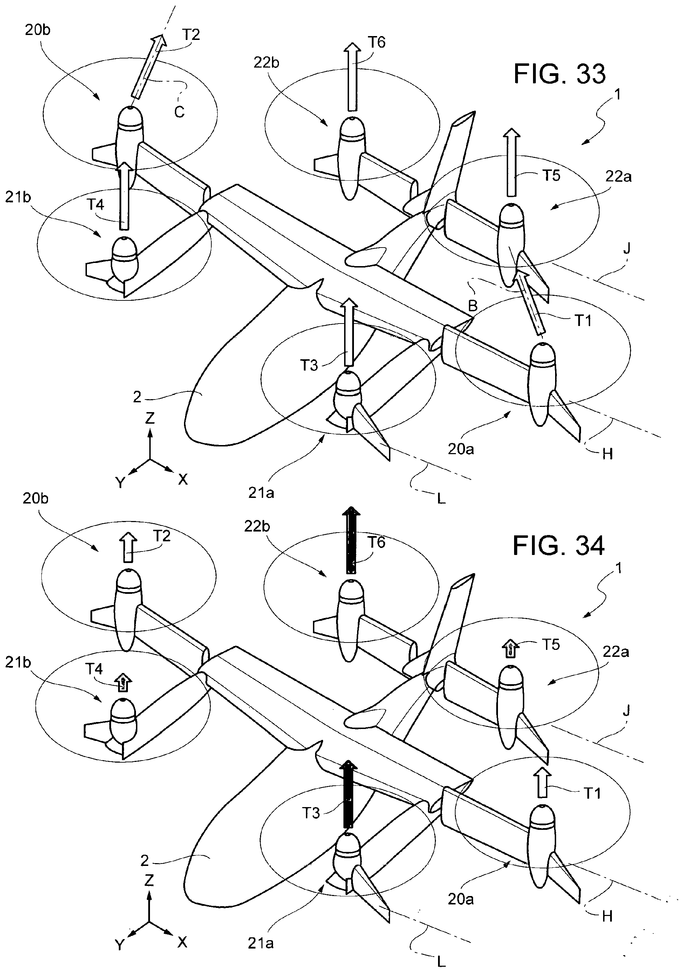

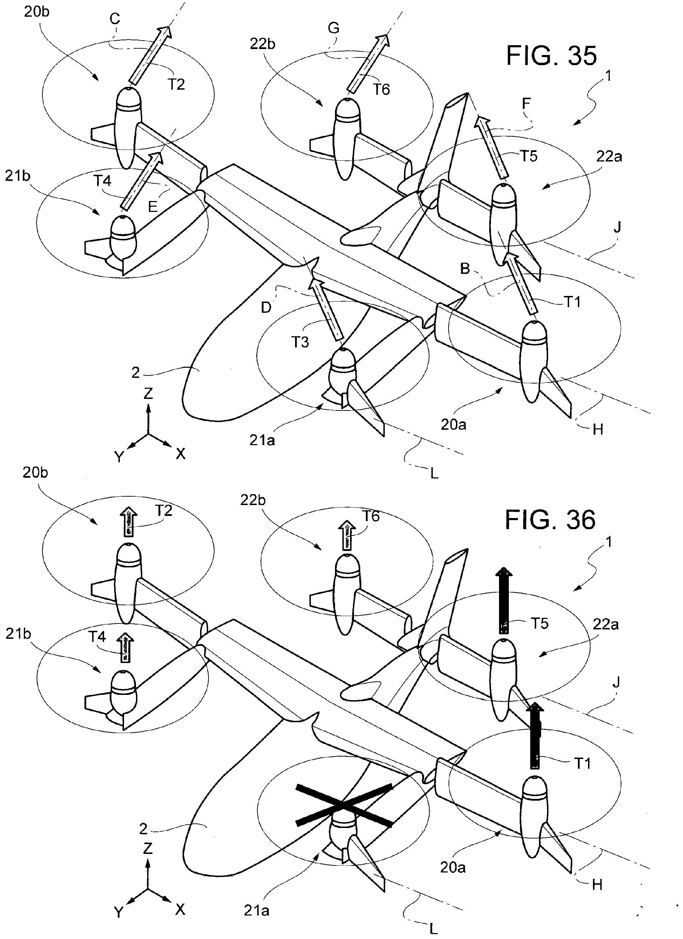

With particular reference to Figures 33, 34, and 35, if it is necessary to generate a moment around the axis Z and perform a yaw manoeuvre around the axis Z, the control unit 35:
- commands the actuators 90a, 90b to tilt the axis B of the rotor 20a in a first direction and the axis C of the rotor 20b in a second direction about the axis H, without varying the modulus of the thrusts T1, T2 and without varying the direction and modulus of the thrusts T3, T4, T5, T6 of the rotors 21a, 21b; 22a, 22b (Figure 33); or
- commands the actuators 91a, 91b, 92a, 92b to increase the thrusts T3, T6 of the rotors 21a, 22b and reduce the thrusts T4, T5 of the rotors 21b, 22a while keeping the respective axes D, H and E, G parallel to the axis Z, and keeping the thrusts T1, T2 of the rotors 20a, 20b and the respective axes B, C unchanged (Figure 34); or
- commands the actuators 90a, 91a, 92a, 90b, 91b, 92b to tilt the axes B, D, F of the rotors 20a, 21a, 22a around their axes H, L, J by a first angle and the axes C, E, G of the rotors 20b, 21b, 22b around their axes H, L, J by a second angle different to the first angle (Figure 35), without altering the moduli of the thrusts T1, T2, T3, T4, T5, T6.

With reference to Figures 36 to 38, the methods according to which the control unit 35 adjusts the pitch, roll, and yaw angles of the aircraft 1 in the second configuration with the motor 31a broken down and, as a result, the corresponding rotor 21a inactive, are described below.

If it is necessary to adjust the roll angle of the aircraft 1 about the axis Y (Figure 36), the control unit 35 controls the motors 30a, 30b, 31b, 32a, 32b, so as to increase (decrease) the thrusts T1, T5 of the rotors 20a, 22a and to decrease (increase) the thrusts T2, T4, T6 of the rotors 20b, 21b, 22b, so as to generate a moment on the aircraft 1 about the axis Y.

In particular, the control unit 35 controls the motors 30a, 30b, 31b, 32a, 32b so that the resultant of the thrusts T1, T2, T3, T4, T5, T6 is zero, so as not to generate a yaw angle variation around the axis Z of the aircraft 1.

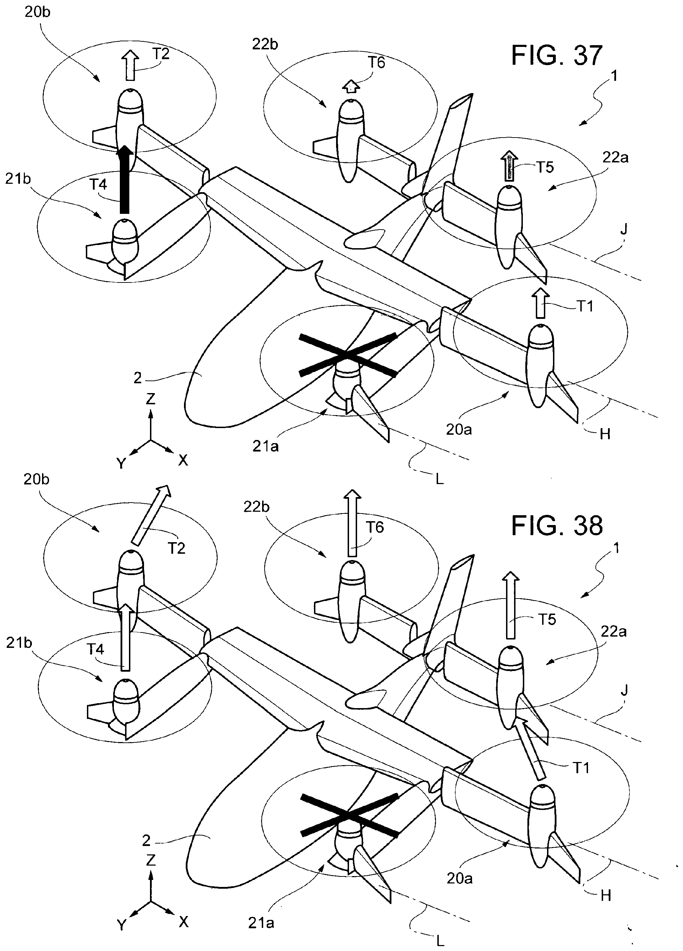

If it is necessary to adjust the pitch angle of the aircraft 1 about the axis X (Figure 37), the control unit 35 controls the motors 30a, 30b, 31b, 32a, 32b, so as to increase (decrease) the thrust T4, leave the thrust T1 unchanged, and decrease (increase) the thrusts T5, T6 differentially so as to generate a moment about the axis X of the aircraft 1.

If it is necessary to adjust the yaw angle of the aircraft 1 around the axis Z (Figure 38), the control unit 35 controls the motors 30a, 30b, 31b, 32a, 32b in such a way as to leave the moduli of the respective thrusts T1, T2, T4, T5, T6 unchanged and to tilt the axes B, C of the rotors 20a, 20b one towards the nose 4 and the other towards the tail 5.

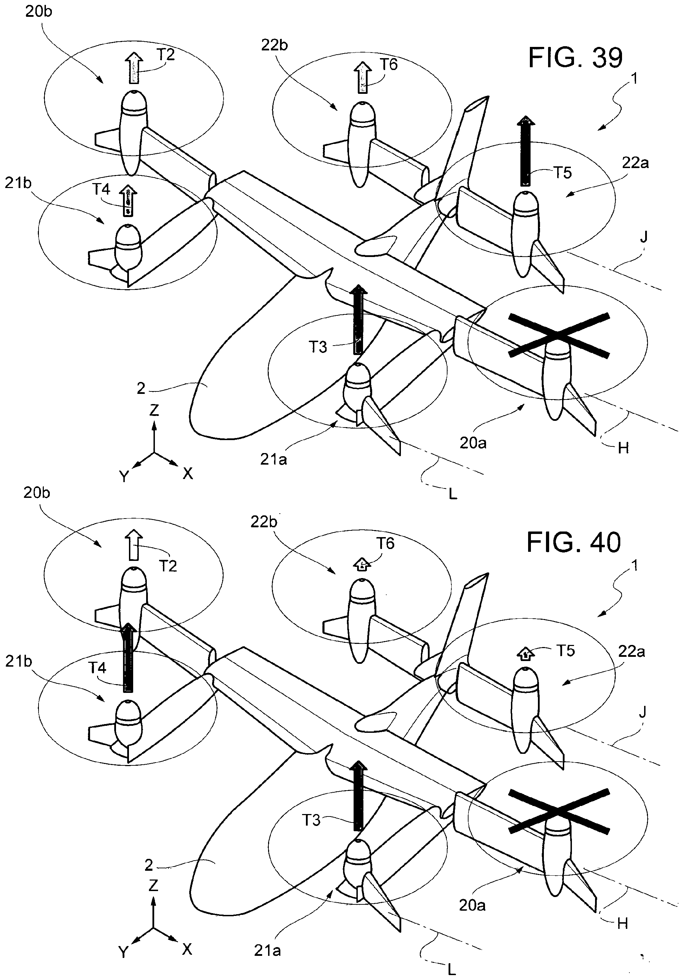

With reference to Figures 39 to 42, the methods according to which the control unit 35 adjusts the pitch, roll, and yaw angles of the aircraft 1 in the second configuration with the motor 30a broken down and, as a result, the corresponding rotor 20a inactive, are described below.

If it is necessary to adjust the roll angle of the aircraft 1 about the axis Y (Figure 39), the control unit 35 controls the motors 30b, 31a, 31b, 32a, 32b, so as to increase (decrease) the thrusts T3, T5 of the rotors 21a, 22a and to decrease (increase) the thrusts T2, T4, T6 of the rotors 20b, 21b, 22b, so as to generate a moment on the aircraft 1 about the axis Y.

In particular, the control unit 35 controls the motors 30b, 31a, 31b, 32a, 32b, so that the resultant of the thrusts T1, T2, T3, T4, T5, T6 is zero, so as not to generate a yaw angle variation around the axis Z of the aircraft 1.

If it is necessary to adjust the pitch angle of the aircraft 1 about the axis X (Figure 40), the control unit 35 controls the motors 30b, 31a, 31b, 32a, 32b, so as to increase (decrease) the thrusts T3, T4, leave the thrust T2 unchanged, and decrease (increase) the thrusts T5 and T6.

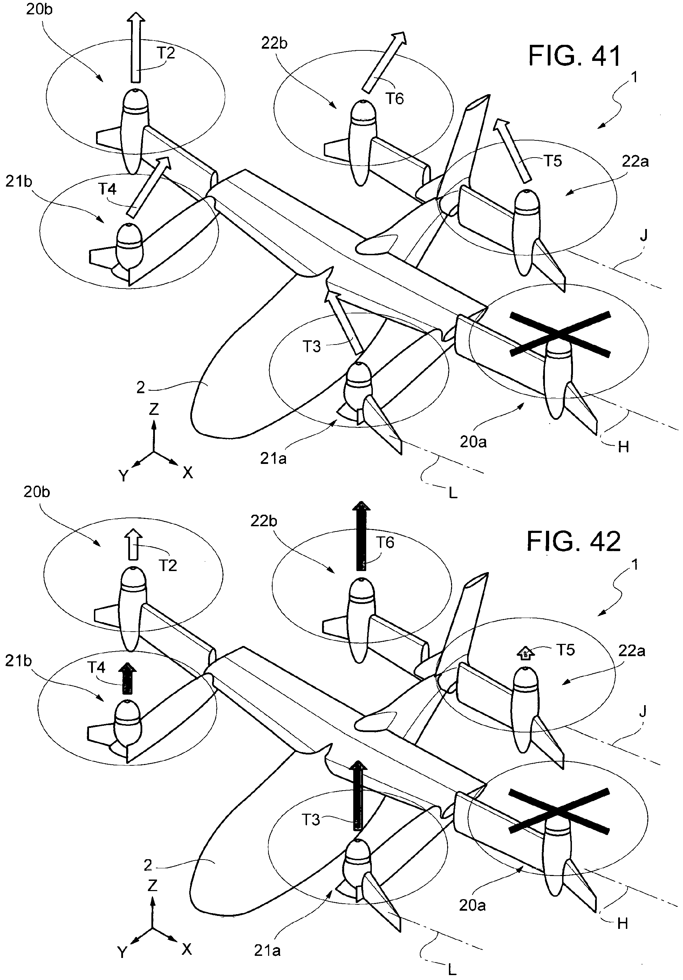

If it is necessary to adjust the yaw angle of the aircraft 1 about the axis Z, the control unit 35 controls the motors 30b, 31a, 31b, 32a, 32b, so as to:
- increase (reduce) the thrusts T3, T6 of the respective rotors 21a, 22b and reduce (increase) the thrusts T4, T5 of the respective rotors 21b, 22a and keep the thrust T2 of the rotor 20b constant, without varying the inclination of the axes B, C, D, E, F, G of the rotors 20a, 20b, 21a, 21b, 21c, 21d (Figure 42); or
- leave the thrusts T2, T3, T4, T5, T6 of the respective rotors 20b, 21a, 21b, 22a, 22b unchanged and tilt the axes D, F of the respective rotors 21a, 22a in a first (second) direction around the respective axes L, J, and the axes E, G of the respective rotors 22a, 22b in a second (first) direction (Figure 41).

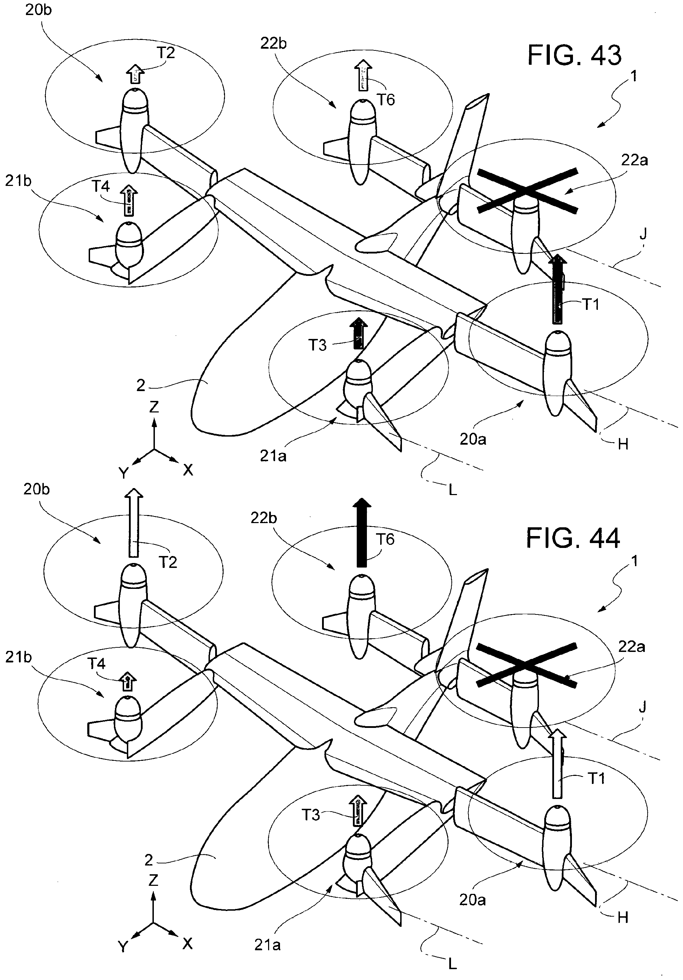

With reference to Figures 43 to 46, the methods according to which the control unit 35 adjusts the pitch, roll, and yaw angles of the aircraft 1 in the second configuration with the motor 32a broken down and, as a result, the corresponding rotor 22a inactive, are described below.

If it is necessary to adjust the roll angle of the aircraft 1 about the axis Y (Figure 43), the control unit 35 controls the motors 30a, 30b, 31a, 31b, 32b, so as to increase (decrease) the thrusts T1, T3 of the rotors 20a, 21a and to reduce (increase) the thrusts T2, T4, T6 of the rotors 20b, 21b, 22b, so as to generate a moment on the aircraft 1 about the axis Y.

In particular, the control unit 35 controls the motors 30a, 30b, 31a, 31b, 32b, so that the resultant moment of the thrusts T1, T2, T3, T4, T5 around the axis Z is zero, so as not to generate a yaw angle variation around the axis Z of the aircraft 1.

If it is necessary to adjust the pitch angle of the aircraft 1 about the axis X (Figure 44), the control unit 35 controls the motors 30a, 30b, 31a, 31b, 32b, so as to increase (decrease) the thrust T6 and reduce (increase) the thrusts T3, T4 leaving the thrusts T1, T2 unchanged. In particular, the control unit 35 controls the motors 31a, 31b so that the reduced (increased) thrust T3 is greater (lesser) in modulus than the reduced thrust T4. A moment is thus generated around the axis X of the aircraft 1.

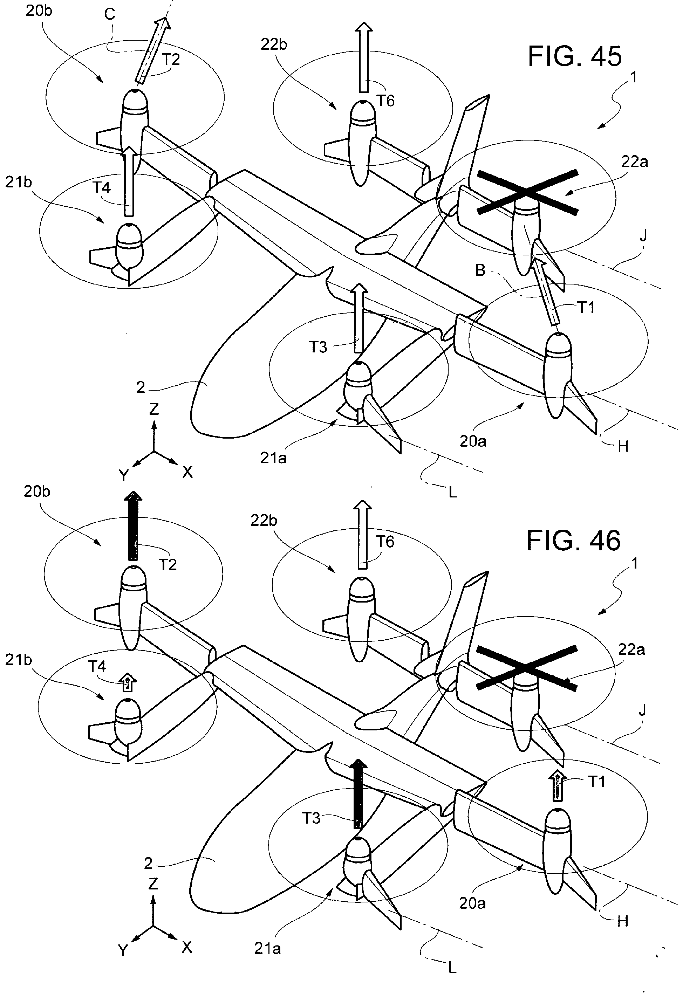

If it is necessary to generate a moment around the axis Y and adjust the yaw angle of the aircraft 1 about the axis Z, the control unit 35 controls the motors 30a, 30b, 31a, 31b, 32b, so as to:
- command (Figure 45) the motors 30a, 30b, 31a, 31b, 32b to leave the thrusts T1, T2, T3, T4, T6 of the respective rotors 20a, 20b, 21a, 21b, 22b unchanged and to command the actuators 90a, 90b to tilt the axis B of the rotor 20a in a first (second) direction and the axis C of the rotor 21a in a second (first) direction. Consequently, the thrust T1 has a first component parallel to the axis Y and directed towards the nose 4 (tail 5) and the thrust T2 has a second component parallel to the axis Y and directed towards the tail 5 (nose 4); or
- command (Figure 46) the motors 31a, 30b so as to increase (reduce) the thrusts T3, T2 and the motors 30a, 31b so as to reduce (increase) the thrusts T1, T4 and control the motor 32b so as to keep the thrust T6 constant. In particular, the control unit 35 controls the motors 30a, 31b so that the reduced thrust T1 is greater (lesser) than the reduced (increased) thrust T4.

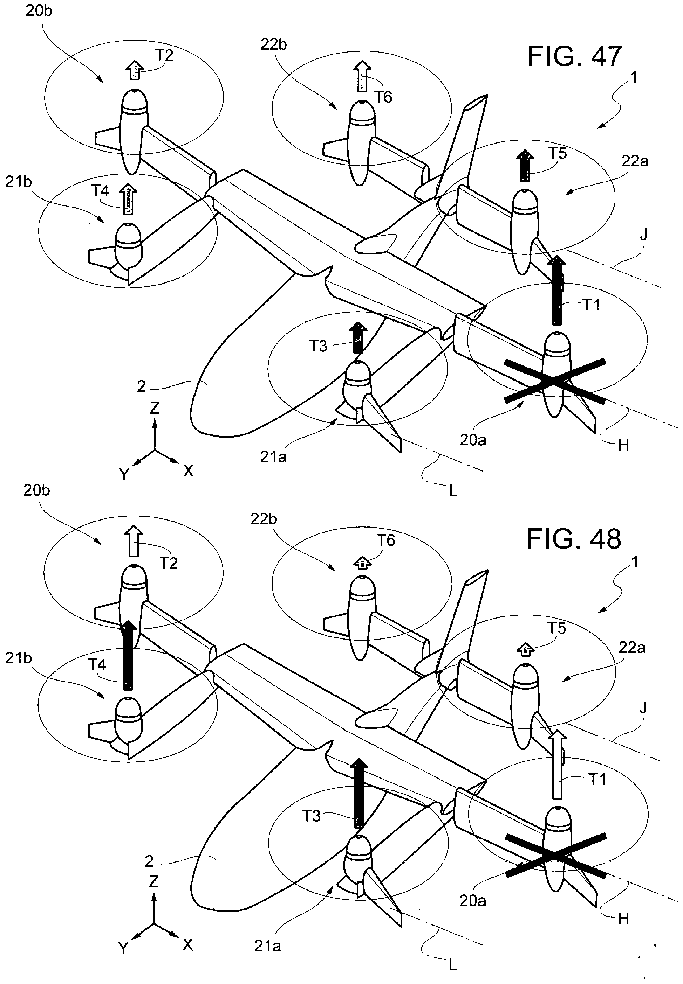

With reference to Figures 47 to 50, the methods according to which the control unit 35 adjusts the pitch, roll, and yaw angles of the aircraft 1 in the second configuration and with the actuator 90a of the rotor 20a broken down, but with the motor 30a running, are described below. In this condition, the control unit 35 is able to adjust the thrust T1 of the rotor 20a that however remains directed parallel to the axis Z.

If it is necessary to adjust the roll angle of the aircraft 1 about the axis Y (Figure 47), the control unit 35 controls the motors 30a, 30b, 31a, 31b, 32a, 32b, so as to increase (decrease) the thrusts T1, T3, T5 of the rotors 20a, 21a, 22a and to reduce (increase) the thrusts T2, T4, T6 of the rotors 20b, 21b, 22b, so as to generate a moment on the aircraft 1 about the axis Y. In particular, the control unit 35 controls the motors 30a, 30b, 31a, 31b, 32a, 32b so that the resultant of the thrusts T1, T2, T3, T4, T5, T6 is zero, so as not to generate a yaw angle variation around the axis Z of the aircraft 1.

If it is necessary to adjust the pitch angle of the aircraft 1 about the axis X (Figure 48), the control unit 35 controls the motors 30a, 30b, 31a, 31b, 32a, 32b so as to increase (decrease) the thrusts T3, T4, leave the thrust T1, T2 unchanged, and decrease (increase) the thrusts T5, T6 so as to generate a moment about the axis X.

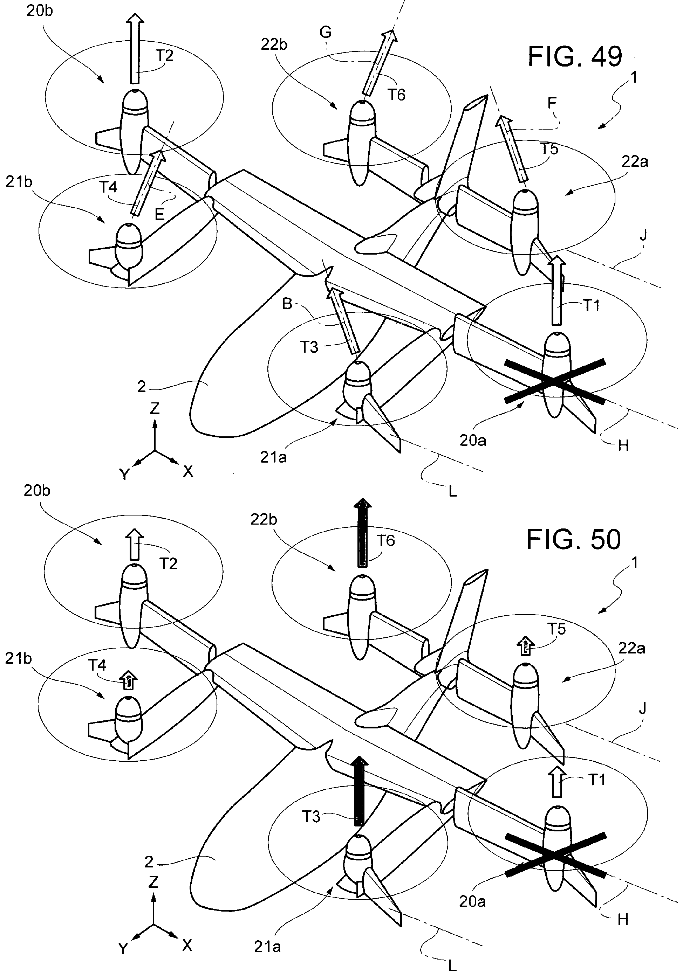

If it is necessary to adjust the yaw angle of the aircraft 1 about the axis Z, the control unit 35 controls the motors 30a, 30b, 31a, 31b, 32a, 32b, so as to:
- command (Figure 49) the motors 30b, 31a, 31b, 32a to leave the thrusts T2, T3, T4, T5, T6 of the respective rotors 20b, 21a, 21b, 22a, 22b unchanged, command the actuators 91a, 92a so as to tilt the axes B, F of the rotors 21a, 22a in a first (second) direction around the axes L, J, and command the actuators 91b, 92b so as to tilt the axes E, G of the rotors 21b, 22b in a second (first) direction around the axes L, J. Consequently, the thrusts T3, T5 have respective first components parallel to the axis Y and directed towards the nose 4 (tail 5) and the thrusts T4, T6 have respective second components parallel to the axis Y and directed towards the tail 5 (nose 4). The above-mentioned first and second components generate a moment about the axis Y on the aircraft 1; or
- command (Figure 50) the motors 30a, 30b so as to leave the thrusts T1, T2 of the respective rotors 20a, 20b unchanged, to command the motors 31a, 32b so as to increase (decrease) the thrusts T3, T6 of the respective rotors 21a, 22b, to command the motors 31b, 32a so as to decrease (increase) the thrusts T4, T5 of the respective rotors 21b, 22a, and to command the actuators 90a, 90b, 91a, 91b, 92a, 92b so as to leave the directions of the thrusts T1, T2; T3, T4; T5, T6 of the respective rotors 30a, 30b; 31a, 31b; 32a, 32b unchanged around the corresponding axes H, L, J (Figure 50).

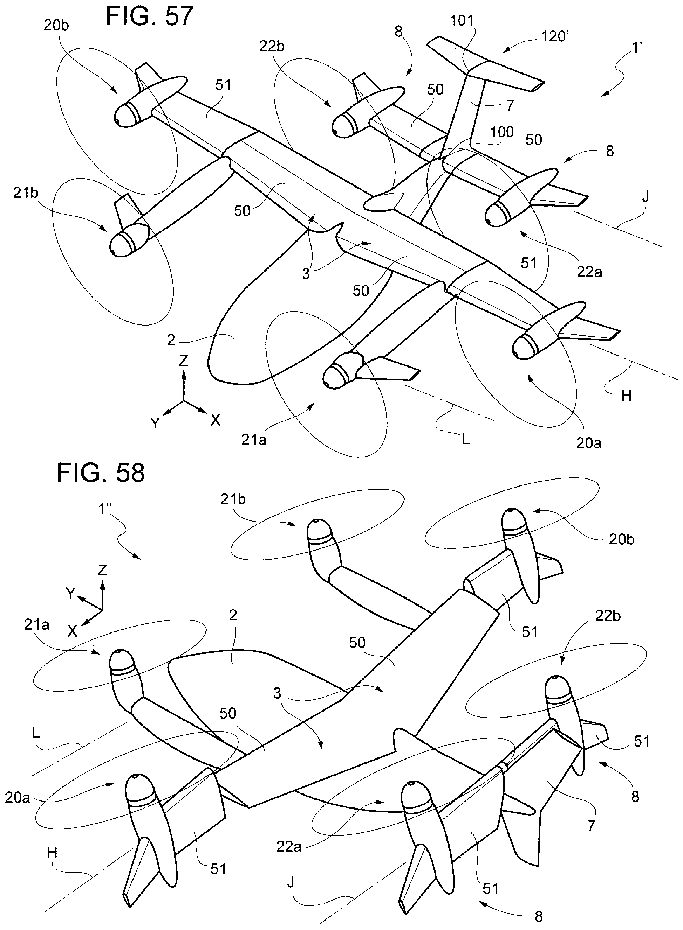

With reference to Figure 57, reference number 1' indicates an aircraft according to a second embodiment of this invention.

The aircraft 1' is similar to the aircraft 1 and will be described below only as far as it differs from the latter; the same or equivalent parts of the aircrafts 1, 1' will be distinguished, where possible, by the same reference numbers.

In particular, the aircraft 1' differs from the aircraft 1 in that it comprises a stabiliser 120' projecting, cantilevered, from the wing tip edge 101 of the tail fin 7.

The operation of the aircraft 1' is similar to that of the aircraft 1 and is not, therefore, described in detail.

With reference to Figure 58, reference number 1" indicates an aircraft according to a third embodiment of this invention.

The aircraft 1" is similar to the aircraft 1 and will be described below only as far as it differs from the latter; the same or equivalent parts of the aircrafts 1, 1" will be distinguished, where possible, by the same reference numbers.

In particular, the aircraft 1'' differs from the aircraft 1 in that the wing tip portions 51 of the half-wings 8 are connected to each other and can, therefore, be jointly tilted around the axis J.

The advantages afforded by the aircraft 1, 1', 1" produced according to this invention are apparent from an examination of the characteristics thereof.

In particular, the wing areas 60a, 60b; 61a; 62a, 62b; 70a, 70b; 72a, 72b are operationally connected to the respective rotors 20a, 20b; 21a; 21b; 22a, 22b, and can be tilted around respective axes H; L; J following the inclination of the rotors 20a, 20b; 21a; 21b; 22a, 22b around the corresponding axes H; L; J independently of each other.

In this way, the wing areas 60a, 60b; 61a, 61b; 62a, 62b; 70a, 70b; 72a, 72b generate aerodynamic forces of lift L1, L2, L3, L4, negative lift L5, L6, and resistance R1, R2, R3, R4, R5, R6 with a modulus and direction depending on the corresponding angle of inclination with respect to the direction parallel to the axis Y. These aerodynamic forces may be effectively used to control the roll, pitch, and yaw angles of the aircraft 1, 1', 1" both in the first "airplane" configuration and in the second "helicopter" configuration, including if one or more of the motors 30a, 30b; 31a, 31b; 32a, 32b and/or the actuators 90a, 90b, 91a, 91b, 92a, 92b is broken down.

It is thus possible, unlike the solutions known and described in the introduction to this patent application, to use the same actuator 90a, 90b, 91a, 91b, 92a, 92b for both:
- adjusting the direction of the thrust T1, T2; T3, T4; T5, T6 generated by the rotors 20a, 20b; 21a, 21b; 22a, 22b and then putting the aircraft 1, 1' 1" in the first "airplane" configuration, in the second "helicopter" configuration, or determining the transition between the above-mentioned first "airplane" configuration and second "helicopter" configuration and controlling the roll, pitch, and yaw angles in both configurations; and
- tilting the wing areas 60a, 60b; 61a, 61b; 62a, 62b; 70a, 70b; 72a, 72b by a desired angle with respect to the direction parallel to the axis Y so as to adjust the relative angles of incidence thereof and generate a resulting aerodynamic control force on the aircraft 1, 1', 1" in the first, "airplane" configuration.

This reduces the number of components of the aircraft 1, 1', 1", while ensuring complete and effective manoeuvrability in all flight conditions.

At the same time, the interference of the half-wings 3, 8 with the downward blowing generated by the rotors 20a, 20b, 21a, 21b, 22a, 22b, when the aircraft 1, 1', 1" is in the second "helicopter" configuration, is reduced.

Unlike the known solutions described in the introduction to this description, the aircraft 1, 1', 1" does not require movable control surfaces that can be independently operated by the rotors 20a, 20b (21a, 21b; 22a, 22b) and interposed between the root portion 50 and the corresponding nacelle 40a, 40b along the extension direction of the half-wing 3, 8.

It is thus possible to bring the nacelles 40a, 40b (41a, 41b) and the rotors 20a, 20b; 21a, 21b (22a, 22b) closer to the fuselage 2, increasing the compactness of the aircraft 1.

Due to the fact that the wing areas 60a, 60b; 61a, 61b; 62 are arranged at the wing tips 52 of the respective half-wings 3, 8 and the fact that they can be fully tilted independently of each other around the respective axes H, L, J, the moments generated by them around the axis Y are particularly high, even for small angles of inclination of the half-wings 3, 8 with respect to the axis Y.

Each half-wing 3, 8 essentially comprises:
- a root portion 50 attached to the fuselage 2 and a wing tip portion 51;
- a wing tip portion 51 that can be tilted with respect to the root portion 50 about the axis H, J and supporting the rotor 20a, 20b; 22a, 22b; and
- a respective wing area 60a, 60b; 62a, 62b; 70a, 70b; 72a, 72b operationally connected to the respective rotor 20a, 20b; 22a, 22b and the respective wing tip portion 51.

The nacelles 41a, 41b also have wing areas 61a, 61b connected to their respective rotors 22a, 22b.

Thus, it is possible to control the aircraft 1, 1', 1" in the first "airplane" configuration particularly effectively, even with reduced angles of inclination of the wing tip portion 51 of the half-wings 3, 8 or of the wing areas 61a, 61b.

The wing tip portion 51 comprises the wing areas 60a, 70a (60b, 70b; 62a, 62b; 72a, 72b) and the rotor 20a (20b; 22a, 22b). Thanks to this, the end portion 51 defines a modulus that can be applied to both the half-wings 3 and the half-wings 8.

The leading edge 68 of the wing area 60a, 60b; 61a; 62a, 62b is crossed by the axis H (L, J) when the aircraft 1 is in the first "airplane" configuration.

As a result, the moment of inertia of the wing area 60a, 60b; 61a; 62a, 62b with respect to the above-mentioned axis H (L, J) is reduced, enabling the actuation loads required to move the wing area 60a, 60b; 61a; 62a, 62b and, consequently, the stiffness and weight of the actuators 90a, 90b, 91a, 91b, 92a, 92b.

The chord 66 lengths of each wing area 60a, 60b; 61a; 62a, 62b progressively increase from a minimum value to a maximum value, proceeding from the corresponding wing tip 52 towards the corresponding wing tip 80.

Accordingly, when the aircraft 1 is in the second "helicopter" configuration, each wing area 60a, 60b; 61a; 62a, 62b exposes its leading edge 68, tapered with respect to the axis Z, to the blowing generated by the corresponding rotor 20a, 20b; 21a, 21b; 22a, 22b, thereby reducing the interference with this blowing.

It is clear that changes may be made to the aircraft 1, 1', 1'' described and illustrated herein, and variations produced thereto, without, for this reason, departing from the scope of protection defined by the claims.

Some of the half-wings 3, 8 or the nacelles 41a, 41b may lack the corresponding wing areas 60a, 60b; 62a; 62b, 61°, 61b.

In that case, the aircraft 1, 1', 1" would comprise only one or two pairs of half-wings 3, 8 with only corresponding wing areas 70a, 70b; 72a; 72b.

The aircraft 1, 1', 1'' could, moreover, comprise just one or two pairs of rotors 20a, 20b; 21a, 21b; 22a, 22b that can be tilted about the respective axes H; L; J and one or two pairs of rotors 20a, 20b; 21a, 21b; 22a, 22b fixed with respect to the corresponding axes H; L; J.

The wing areas 60a, 60b, 62a, 62b could be connected to the respective wing areas 70a, 70b, 72a, 72b in such a way that the inclination of the respective wing areas 70a, 70b, 72a, 72b (and of the respective nacelles 40a, 40b) about the axis H; J by a first angle determines the inclination of the corresponding wing areas 60a, 60b, 61a, 61b about the same axis H; J by a second angle that is different to the first angle, in the example illustrated greater than the first angle

Finally, the aircraft 1, 1', 1" could include an undercarriage arranged underneath the nose 4 of fuselage 2.

## Claims

1. A convertible aircraft (1, 1', 1") capable of hovering, comprising:
- a fuselage (2) extending along a first longitudinal axis (Y) of said convertible aircraft (1, 1', 1");
- at least one pair of half-wings (3) projecting sideways, cantilevered, from said fuselage (2);
- at least one pair of first rotors (20a, 20b;) that are configured to rotate about a second axis (B, C;) and are configured to be tilted independently of each other about a third axis (H) transverse to said first axis (Y); and
- at least one pair of first motors (30a, 30b) that are configured to be operated to rotate said first rotors (20a, 20b) independently of each other around the corresponding second axes (B, C);
said convertible aircraft (1, 1', 1") being selectively movable between:
- a first forward flight configuration in which said second axes (B, C) are arranged parallel to said first axis (Y); and
- a second take-off/landing configuration in which said second axes (B, C) are arranged transverse to said first axis (Y);
said convertible aircraft (1, 1', 1") comprising at least one pair of first wing areas (60a, 60b; 70a, 70b;) operationally connected to respective said first rotors (20a, 20b);
said first wing areas (60a, 60b; 70a, 70b;) being configured to be tilted with respect to said third axis (H) as a result of the inclination of said respective first rotors (20a, 20b) about said third axis (H) independently of each other;
said fuselage (2) comprising a nose (4) and a tail (5) opposite each other along said first longitudinal axis (Y);
said convertible aircraft (1, 1', 1") further comprising a pair of second rotors (21a, 21b) that are configured to rotate about respective fourth axes (D, E) and are configured to be independently tilted about a fifth axis (L) transverse to said first axis (Y);
said second rotors (21a, 21b) being arranged, when said convertible aircraft (1, 1', 1'') is in said second configuration, in front of said first rotors (20a, 20b) with reference to a normal forward direction of said aircraft (1), and being interposed between said first rotors (20a, 20b) along a sixth axis (X) orthogonal to said first axis (Y);
said convertible aircraft (1, 1', 1'')further comprising a pair of pylons (120) projecting, cantilevered, from respective root portions (50) of said half-wing (3) parallel to said first axis (Y) and towards said nose (4);
said second rotors (21a, 21b) being supported by respective said pylons (120) and being configured to be tilted around said fifth axis (L);
said convertible aircraft (1, 1', 1") further comprising a pair of first nacelles (41a, 41b) that are configured to be tilted with respect to corresponding said pylons (120) about said fifth axis (L) and supporting said second rotors (21a, 21b); and
- a pair of additional said first wing areas (61a, 61b) projecting cantilevered from respective said first nacelles (41a, 41b) and configured to be tilted with respect to said fifth axis (L) as a result of the inclination of corresponding said second rotors (21a, 21b) about said fifth axis (L);
said convertible aircraft (1, 1', 1") further comprising a pair of third rotors (22a, 22b) that are configured to rotate about respective seventh axes (F, G) and are configured to be tilted independently of each other about an eighth axis (J) transverse to said first axis (Y);
said seventh axes (F, G) being interposed between said second axes (B, C) of said first rotors (20a, 20b) and between said fourth axes (D, E) along said sixth axis (X), when said convertible aircraft (1, 1', 1") is in said second configuration;
said seventh axes (F, G) being arranged behind said second axes (B, C) of said first rotors (20a, 20b) and, with reference to said normal forward direction of said convertible aircraft (1, 1', 1") and when said convertible aircraft (1, 1', 1") is in said second configuration;
said convertible aircraft (1, 1', 1") further comprising:
- a pair of tail planes (8) projecting, cantilevered, from said fuselage (2) at said tail (5);
each tail plane (8) comprising, respectively:
- a first root portion (50) attached to said fuselage (2) of said convertible aircraft (1, 1', 1"); and
- a first wing tip portion (51) that is configured to be tilted with respect to said first root portion (50) about said eight axis (J), and supporting respectively one of said third rotors (22a, 22b) being configured to be tilted around said eighth axis (J); and
- a tail fin (7) comprising a first wing tip edge (100) and a second wing tip edge (101) opposite each other;
said first wing tip edge (100) being arranged at said tail (5); said tail planes (8) projecting, cantilevered, from said first wing tip edge (100);
wherein each said tail plane (8) comprises:
- a further first wing area (62a, 62b) defining a free wing tip (52) of said tail plane (8);
- a second wing area (72a, 72b); and
- a second nacelle (40a, 40b) housing a respective additional motor (32a, 32b) and supporting the corresponding third rotor (22a, 22b);
said second nacelle (40a, 40b) being interposed between said further first wing area (62a, 62b) and said second wing area (72a, 72b) along said third axis (H; J).

2. The convertible aircraft according to claim 1, wherein said half-wing (3) comprises, in turn:
- a second root portion (50) attached to said fuselage (2) of said convertible aircraft (1, 1', 1"); and
- a second wing tip portion (51) configured to be tilted with respect to said root portion (50) about said third axis (H) and supporting said respective first rotor (20a, 20b);
each said first wing area (60a, 60b;70a, 70b;) being defined by said second wing tip portion (51) of the respective said half-wing (3).

3. The convertible aircraft according to claim 1 or 2, wherein said second axes (B, C), seventh axes (F, G) and fourth axes (D, E) are arranged above said fuselage (2) when said convertible aircraft (1, 1', 1") is in said first configuration; and/or
wherein said fourth axes (D, E) are arranged above said second axes (B, C) and said seventh axes (F, G) when said convertible aircraft (1, 1', 1") is in said first configuration.

4. The convertible aircraft according to claim 3, further comprising a stabiliser (120') arranged at said second wing tip edge (101) of said tail fin (7); and/or wherein said second wing tip portions (51) of said tail planes (8) are configured to be jointly tilted with respect to said fuselage (2) around said eighth axis (J).

5. The convertible aircraft according to any one of the preceding claims, wherein said first wing areas (60a, 60b; 61a; 62; 70a, 70b) are configured to be tilted about said third axis (H; L; J) by an angle of between minus twenty and one hundred and ten degrees.

6. The convertible aircraft according to claim 5, wherein said first and second wing area (60a, 70a; 60b, 70b; 62a, 62b; 72a, 72b) can be jointly tilted about said third axis (H; J).

7. The convertible aircraft according to any of the foregoing claims, further comprising:
- a plurality of actuators (90a, 90b, 91a, 91b, 92a, 92b) are operationally connected to respective said first, second, and third rotors (20a, 20b; 21a, 21b; 22a, 22b) and that are configured to be operated to determine the inclination of the respective first axes (B, C), fourth axes (D, E), and eighth axes (F, G) about the corresponding third, fifth, and seventh axes (H; J; L); and
- a control unit (35) is programmed to receive as input a first signal associated with a desired manoeuvre of said convertible aircraft (1, 1', 1''), a second signal associated with a possible breakdown of one of the first, second, and third rotors (20a, 20b; 21a, 21b; 22a, 22b) and a third signal associated with a possible breakdown of at least one of said actuators (90a, 90b, 91a, 91b, 92a, 92b);
said control unit (35) being programmed to generate at its output respective control signals for said first, second, and third motors (30a, 30b; 31a, 31b; 32a, 32b) still in operation and for said actuators still in operation (90a, 90b, 91a, 91b, 92a, 92b), on the basis of said first, second, and third signals in order to execute said manoeuvre.

8. The convertible aircraft according to claim 7, when dependent on claim 2, wherein said control unit (35) is configured to be programmed in the event of the failure of all said first, second, and third motors (30a, 30b; 31a, 31b; 32a, 32b) in said first configuration and if said first signal is associated with a variation of the yaw angle of said convertible aircraft (1, 1', 1") with respect to a ninth axis (Z) orthogonal to said first and sixth axes (Y, X) for:
- commanding a first (90a, 90b) of said actuators (90a, 90b, 91a, 91b, 92a, 92b) to tilt said second wing tip portion (51) of one of said half-wings (3, 8) by a third angle about said third axis (H, J), so as to generate a first aerodynamic resistance value (R1, R3); and
- commanding a second (91a, 91b) of said actuators (90a, 90b, 91a, 91b, 92a, 92b) to tilt said second portion (51) of the other of said half-wings (3, 8) by a second angle, which is different to said first angle, about said third axis (H, J), so as to generate a second aerodynamic resistance value (R2, R4), which is different to the first aerodynamic resistance value (R1, R3), on said convertible aircraft (1, 1', 1'');
said fuselage (2) being interposed between said one and the other of said half-wings (3, 8) along said sixth axis (X).

9. The convertible aircraft according to claim 7 or 8, when dependent on claim 6, wherein said control unit (35) is configured to be programmed in the event that said convertible aircraft (1, 1', 1") is in said first configuration and if said first signal is associated with a variation of the pitch angle of said convertible aircraft (1, 1', 1'') with respect to said sixth axis (X) for:
- commanding a third (92a, 92b) of said actuators (90a, 90b, 91a, 91b, 92a, 92b) to tilt said second wing tip portion (51) of said tail planes (9) about said eighth axis (J) so as to increase/decrease the respective negative lift values (L5; L6) generated; and/or wherein said control unit (35) is is configured to be programmed in the event that said convertible aircraft (1, 1', 1") is in said first configuration and if said first signal is associated with a variation of the roll angle of said convertible aircraft (1, 1', 1'') with respect to said first axis (Y) for:
- commanding a fourth (90a) of said actuators (90a, 90b, 90c, 90d, 90e, 90f) to tilt one of said first wing areas (60a, 70a) around a ninth axis (H) so as to increase/decrease the respective first lift value (L1) generated; and
- commanding a fifth (90b) of said actuators (90a, 90b, 90c, 90d, 90e, 90f) to tilt the other of said first wing areas (60b, 70b) around said axis (H) so as reduce/decrease the respective lift value (L2) generated;
the same said half-wing (3) including said one and the other of said wing areas (60a, 70a; 60b, 70b).

## Patentansprüche

1. Ein Wandelflugzeug (1, 1', 1"), das zum Schwebeflug fähig ist, umfassend:
- einen Rumpf (2), der sich entlang einer ersten Längsachse (Y) des Wandelflugzeugs (1, 1', 1") erstreckt;
- zumindest ein Paar Halbtragflächen (3), die sich seitlich freitragend von dem Rumpf (2) erstrecken;
- zumindest ein Paar erster Rotoren (20a, 20b), die dazu eingerichtet sind, sich um eine zweite Achse (B, C) zu drehen, und dazu eingerichtet sind, unabhängig voneinander um eine quer zu der ersten Achse (Y) verlaufende dritte Achse (H) geneigt zu werden; und
- zumindest ein Paar erster Motoren (30a, 30b), die dazu eingerichtet sind, betätigt zu werden, um die ersten Rotoren (20a, 20b) unabhängig voneinander um die entsprechenden zweiten Achsen (B, C) zu drehen;
wobei das Wandelflugzeug (1, 1', 1") wahlweise bewegbar ist zwischen:
- einer ersten Vorwärtsflugkonfiguration, in der die zweiten Achsen (B, C) parallel zu der ersten Achse (Y) angeordnet sind; und
- einer zweiten Start-/Landekonfiguration, in der die zweiten Achsen (B, C) quer zu der ersten Achse (Y) angeordnet sind;
wobei das Wandelflugzeug (1, 1', 1") zumindest ein Paar erster Tragflächenbereiche (60a, 60b; 70a, 70b) umfasst, die mit jeweiligen ersten Rotoren (20a, 20b) wirkverbunden sind;
wobei die ersten Tragflächenbereiche (60a, 60b; 70a, 70b) dazu eingerichtet sind, infolge der voneinander unabhängigen Neigung der jeweiligen ersten Rotoren (20a, 20b) um die dritte Achse (H) bezüglich der dritten Achse (H) geneigt zu werden;
wobei der Rumpf (2) einen Bug (4) und ein Heck (5) umfasst, die einander entlang der ersten Längsachse (Y) gegenüberliegen;
wobei das Wandelflugzeug (1, 1', 1") ferner ein Paar zweiter Rotoren (21a, 21b) umfasst, die dazu eingerichtet sind, sich um jeweilige vierte Achsen (D, E) zu drehen, und dazu eingerichtet sind, unabhängig voneinander um eine quer zu der ersten Achse (Y) verlaufende fünfte Achse (L) geneigt zu werden;
wobei die zweiten Rotoren (21a, 21b), wenn sich das Wandelflugzeug (1, 1', 1") in der zweiten Konfiguration befindet, bezogen auf eine normale Vorwärtsrichtung des Wandelflugzeugs (1) vor den ersten Rotoren (20a, 20b) angeordnet sind und entlang einer zu der ersten Achse (Y) orthogonalen sechsten Achse (X) zwischen den ersten Rotoren (20a, 20b) angeordnet sind;
wobei das Wandelflugzeug (1, 1', 1") ferner ein Paar Pylone (120) umfasst, die sich von jeweiligen Fußabschnitten (50) der Halbtragfläche (3) parallel zu der ersten Achse (Y) und zu dem Bug (4) hin freitragend erstrecken;
wobei die zweiten Rotoren (21a, 21b) von den jeweiligen Pylonen (120) getragen werden und dazu eingerichtet sind, um die fünfte Achse (L) geneigt zu werden;
wobei das Wandelflugzeug (1, 1', 1") ferner ein Paar erster Gondeln (41a, 41b) umfasst, die dazu eingerichtet sind, bezüglich der entsprechenden Pylone (120) um die fünfte Achse (L) geneigt zu werden, und die zweiten Rotoren (21a, 21b) tragen; und
- ein Paar zusätzlicher erster Tragflächenbereiche (61a, 61b), die sich von den jeweiligen ersten Gondeln (41a, 41b) freitragend erstrecken und dazu eingerichtet sind, infolge der Neigung der entsprechenden zweiten Rotoren (21a, 21b) um die fünfte Achse (L) bezüglich der fünften Achse (L) geneigt zu werden;
wobei das Wandelflugzeug (1, 1', 1") ferner ein Paar dritter Rotoren (22a, 22b) umfasst, die dazu eingerichtet sind, sich um jeweilige siebte Achsen (F, G) zu drehen, und dazu eingerichtet sind, unabhängig voneinander um eine quer zu der ersten Achse (Y) verlaufende achte Achse (J) geneigt zu werden;
wobei die siebten Achsen (F, G), wenn sich das Wandelflugzeug (1, 1', 1") in der zweiten Konfiguration befindet, zwischen den zweiten Achsen (B, C) der ersten Rotoren (20a, 20b) angeordnet sind und zwischen den vierten Achsen (D, E) entlang der sechsten Achse (X) angeordnet sind;
wobei die siebten Achsen (F, G), bezogen auf die normale Vorwärtsrichtung des Wandelflugzeugs (1, 1', 1") und wenn sich das Wandelflugzeug (1, 1', 1") in der zweiten Konfiguration befindet, hinter den zweiten Achsen (B, C) der ersten Rotoren (20a, 20b) angeordnet sind;
wobei das Wandelflugzeug (1, 1', 1") ferner umfasst:
- ein Paar Leitwerksflächen (8), die sich an dem Heck (5) freitragend von dem Rumpf (2) erstrecken;
wobei jede Leitwerksfläche (8) jeweils umfasst:
- einen ersten Fußabschnitt (50), der an dem Rumpf (2) des Wandelflugzeugs (1, 1', 1") befestigt ist; und
- einen ersten Flügelspitzenabschnitt (51), der dazu eingerichtet ist, bezüglich des ersten Fußabschnitts (50) um die achte Achse (J) geneigt zu werden, und jeweils einen der dritten Rotoren (22a, 22b) trägt, der dazu eingerichtet ist, um die achte Achse (J) geneigt zu werden; und
- eine Heckflosse (7), die eine erste Flügelspitzenkante (100) und eine dieser gegenüberliegende zweite Flügelspitzenkante (101) umfasst;
wobei die erste Flügelspitzenkante (100) an dem Heck (5) angeordnet ist und die Leitwerksflächen (8) sich freitragend von der ersten Flügelspitzenkante (100) erstrecken;
wobei jede Leitwerksfläche (8) umfasst:
- einen weiteren ersten Tragflächenbereich (62a, 62b), der eine freie Flügelspitze (52) der Leitwerksfläche (8) definiert;
- einen zweiten Tragflächenbereich (72a, 72b); und
- eine zweite Gondel (40a, 40b), die einen jeweiligen zusätzlichen Motor (32a, 32b) aufnimmt und den entsprechenden dritten Rotor (22a, 22b) trägt;
wobei die zweite Gondel (40a, 40b) entlang der dritten Achse (H; J) zwischen dem weiteren ersten Tragflächenbereich (62a, 62b) und dem zweiten Tragflächenbereich (72a, 72b) angeordnet ist.

2. Das Wandelflugzeug nach Anspruch 1,
wobei die Halbtragfläche (3) wiederum umfasst:
- einen zweiten Fußabschnitt (50), der an dem Rumpf (2) des Wandelflugzeugs (1, 1', 1") befestigt ist; und
- einen zweiten Flügelspitzenabschnitt (51), der dazu eingerichtet ist, bezüglich des Fußabschnitts (50) um die dritte Achse (H) geneigt zu werden, und den jeweiligen ersten Rotor (20a, 20b) trägt;
wobei jeder erste Tragflächenbereich (60a, 60b; 70a, 70b) durch den zweiten Flügelspitzenabschnitt (51) der jeweiligen Halbtragfläche (3) definiert ist.

3. Das Wandelflugzeug nach Anspruch 1 oder 2,
wobei die zweiten Achsen (B, C), die siebten Achsen (F, G) und die vierten Achsen (D, E) oberhalb des Rumpfs (2) angeordnet sind, wenn sich das Wandelflugzeug (1, 1', 1") in der ersten Konfiguration befindet; und/oder
wobei die vierten Achsen (D, E) oberhalb der zweiten Achsen (B, C) und der siebten Achsen (F, G) angeordnet sind, wenn sich das Wandelflugzeug (1, 1', 1") in der ersten Konfiguration befindet.

4. Das Wandelflugzeug nach Anspruch 3, ferner umfassend:
einen Stabilisator (120'), der an der zweiten Flügelspitzenkante (101) der Heckflosse (7) angeordnet ist; und/oder
wobei die zweiten Flügelspitzenabschnitte (51) der Leitwerksflächen (8) dazu eingerichtet sind, gemeinsam bezüglich des Rumpfs (2) um die achte Achse (J) geneigt zu werden.

5. Das Wandelflugzeug nach einem der vorhergehenden Ansprüche,
wobei die ersten Tragflächenbereiche (60a, 60b; 61a; 62; 70a, 70b) dazu eingerichtet sind, um die dritte Achse (H; L; J) um einen Winkel zwischen minus zwanzig Grad und einhundertzehn Grad geneigt zu werden.

6. Das Wandelflugzeug nach Anspruch 5,
wobei der erste und der zweite Tragflächenbereich (60a, 70a; 60b, 70b; 62a, 62b; 72a, 72b) gemeinsam um die dritte Achse (H; J) geneigt werden können.

7. Das Wandelflugzeug nach einem der vorhergehenden Ansprüche, ferner umfassend:
- eine Vielzahl an Aktuatoren (90a, 90b, 91a, 91b, 92a, 92b), die mit jeweiligen der ersten, zweiten und dritten Rotoren (20a, 20b; 21a, 21b; 22a, 22b) wirkverbunden sind und dazu eingerichtet sind, betätigt zu werden, um die Neigung der jeweiligen ersten Achsen (B, C), vierten Achsen (D, E) und achten Achsen (F, G) um die entsprechenden dritten, fünften und siebten Achsen (H; J; L) zu bestimmen; und
- eine Steuereinheit (35), die dazu programmiert ist, als Eingabe ein erstes Signal, das einem gewünschten Manöver des Wandelflugzeugs (1, 1', 1") zugeordnet ist, ein zweites Signal, das einem möglichen Ausfall eines der ersten, zweiten und dritten Rotoren (20a, 20b; 21a, 21b; 22a, 22b) zugeordnet ist, und ein drittes Signal, das einem möglichen Ausfall zumindest eines der Aktuatoren (90a, 90b, 91a, 91b, 92a, 92b) zugeordnet ist, zu empfangen;
wobei die Steuereinheit (35) dazu programmiert ist, auf Grundlage des ersten, zweiten und dritten Signals an ihrem Ausgang jeweilige Steuersignale für die noch in Betrieb befindlichen ersten, zweiten und dritten Motoren (30a, 30b; 31a, 31b; 32a, 32b) und für die noch in Betrieb befindlichen Aktuatoren (90a, 90b, 91a, 91b, 92a, 92b) zu erzeugen, um das Manöver auszuführen.

8. Das Wandelflugzeug nach Anspruch 7, wenn dieser von Anspruch 2 abhängig ist,
wobei die Steuereinheit (35) dazu eingerichtet ist, für den Fall eines Ausfalls sämtlicher erster, zweiter und dritter Motoren (30a, 30b; 31a, 31b; 32a, 32b) in der ersten Konfiguration und wenn das erste Signal einer Änderung des Gierwinkels des Wandelflugzeugs (1, 1', 1") bezüglich einer zu der ersten und der sechsten Achse (Y, X) orthogonalen neunten Achse (Z) zugeordnet ist, zu Folgendem programmiert zu sein:
- Ansteuern eines ersten Aktuators (90a, 90b) der Aktuatoren (90a, 90b, 91a, 91b, 92a, 92b), um den zweiten Flügelspitzenabschnitt (51) einer der Halbtragflächen (3, 8) um einen dritten Winkel um die dritte Achse (H, J) zu neigen, sodass ein erster Luftwiderstandswert (R1, R3) erzeugt wird; und
- Ansteuern eines zweiten Aktuators (91a, 91b) der Aktuatoren (90a, 90b, 91a, 91b, 92a, 92b), um den zweiten Abschnitt (51) der anderen der Halbtragflächen (3, 8) um einen zweiten Winkel, der sich von dem ersten Winkel unterscheidet, um die dritte Achse (H, J) zu neigen, sodass an dem Wandelflugzeug (1, 1', 1") ein zweiter Luftwiderstandswert (R2, R4) erzeugt wird, der sich von dem ersten Luftwiderstandswert (R1, R3) unterscheidet;
wobei der Rumpf (2) entlang der sechsten Achse (X) zwischen der einen und der anderen der Halbtragflächen (3, 8) angeordnet ist.

9. Das Wandelflugzeug nach Anspruch 7 oder 8, wenn dieser von Anspruch 6 abhängig ist,
wobei die Steuereinheit (35) dazu eingerichtet ist, für den Fall, dass sich das Wandelflugzeug (1, 1', 1") in der ersten Konfiguration befindet, und wenn das erste Signal einer Änderung des Nickwinkels des Wandelflugzeugs (1, 1', 1") bezüglich der sechsten Achse (X) zugeordnet ist, zu Folgendem programmiert zu sein:
- Ansteuern eines dritten Aktuators (92a, 92b) der Aktuatoren (90a, 90b, 91a, 91b, 92a, 92b), um den zweiten Flügelspitzenabschnitt (51) der Leitwerksflächen (9) um die achte Achse (J) zu neigen, sodass die jeweils erzeugten negativen Auftriebswerte (L5; L6) erhöht/verringert werden; und/oder
wobei die Steuereinheit (35) dazu eingerichtet ist, für den Fall, dass sich das Wandelflugzeug (1, 1', 1") in der ersten Konfiguration befindet, und wenn das erste Signal einer Änderung des Rollwinkels des Wandelflugzeugs (1, 1', 1") bezüglich der ersten Achse (Y) zugeordnet ist, zu Folgendem programmiert zu sein:
- Ansteuern eines vierten Aktuators (90a) der Aktuatoren (90a, 90b, 90c, 90d, 90e, 90f), um einen der ersten Tragflächenbereiche (60a, 70a) um eine neunte Achse (H) zu neigen, sodass der jeweils erzeugte erste Auftriebswert (L1) erhöht/verringert wird; und
- Ansteuern eines fünften Aktuators (90b) der Aktuatoren (90a, 90b, 90c, 90d, 90e, 90f), um den anderen der ersten Tragflächenbereiche (60b, 70b) um die Achse (H) zu neigen, sodass der jeweils erzeugte Auftriebswert (L2) reduziert/verringert wird;
wobei dieselbe Halbtragfläche (3) den einen und den anderen der Tragflächenbereiche (60a, 70a; 60b, 70b) umfasst.

## Revendications

1. Aéronef convertible (1, 1', 1") apte à effectuer un vol stationnaire, comprenant :
- un fuselage (2) s'étendant selon un premier axe longitudinal (Y) dudit aéronef convertible (1, 1', 1") ;
- au moins une paire de demi-ailes (3) faisant saillie latéralement, en porte-à-faux, dudit fuselage (2) ;
- au moins une paire de premiers rotors (20a, 20b) qui sont configurés pour tourner autour d'un deuxième axe (B, C) et sont configurés pour être inclinés indépendamment les uns des autres autour d'un troisième axe (H) transversal audit premier axe (Y) ; et
- au moins une paire de premiers moteurs (30a, 30b) qui sont configurés pour fonctionner pour faire tourner lesdits premiers rotors (20a, 20b) indépendamment les uns des autres autour des deuxièmes axes (B, C) correspondants ;
ledit aéronef (1, 1', 1") étant mobile de manière sélective entre :
- une première configuration de vol vers l'avant dans laquelle lesdits deuxièmes axes (B, C) sont agencés parallèlement audit premier axe (Y) ; et
- une seconde configuration de décollage/atterrissage dans laquelle lesdits deuxièmes axes (B, C) sont agencés transversalement audit premier axe (Y) ;
ledit aéronef convertible (1, 1', 1") comprenant au moins une paire de premières zones d'aile (60a, 60b ; 70a, 70b) reliées opérationnellement auxdits premiers rotors (20a, 20b) respectifs ;
lesdites premières zones d'aile (60a, 60b ; 70a, 70b) étant configurées pour être inclinées par rapport audit troisième axe (H) en conséquence de l'inclinaison desdits premiers rotors (20a, 20b) respectifs autour dudit troisième axe (H) indépendamment les uns des autres ;
ledit fuselage (2) comprenant un nez (4) et une queue (5) opposés l'un à l'autre selon ledit premier axe longitudinal (Y) ;
ledit aéronef convertible (1, 1', 1") comprenant en outre une paire de deuxièmes rotors (21a, 21b) qui sont configurés pour tourner autour de quatrièmes axes respectifs (D, E) et sont configurés pour être indépendamment inclinés autour d'un cinquième axe (L) transversal audit premier axe (Y) ;
lesdits deuxièmes rotors (21a, 21b) étant agencés, lorsque ledit aéronef convertible (1, 1', 1") est dans ladite deuxième configuration, devant lesdits premiers rotors (20a, 20b) en référence à une direction normale vers l'avant dudit aéronef (1), et étant interposés entre lesdits premiers rotors (20a, 20b) selon un sixième axe (X) orthogonal audit premier axe (Y) ;
ledit aéronef convertible (1, 1', 1") comprenant en outre une paire de pylônes (120) faisant saillie, en porte-à-faux, à partir de parties racine (50) respectives de ladite demi-aile (3) parallèlement audit premier axe (Y) et vers ledit nez (4) ;
lesdits deuxièmes rotors (21a, 21b) étant supportés par lesdits pylônes (120) respectifs et étant configurés pour être inclinés autour dudit cinquième axe (L) ;
ledit aéronef convertible (1, 1', 1") comprenant en outre une paire de premières nacelles (41a, 41b) qui sont configurées pour être inclinées par rapport auxdits pylônes (120) correspondants autour dudit cinquième axe (L) et supportant lesdits deuxièmes rotors (21a, 21b) ; et
- une paire desdites premières zones d'aile (61a, 61b) supplémentaires en saillie en porte-à-faux desdites premières nacelles (41a, 41b) respectives et configurées pour être inclinées par rapport audit cinquième axe (L) en conséquence de l'inclinaison desdits deuxièmes rotors (21a, 21b) correspondants autour dudit cinquième axe (L) ;
ledit aéronef convertible (1, 1', 1") comprenant en outre une paire de troisièmes rotors (22a, 22b) qui sont configurés pour tourner autour de sept axes respectifs (F, G) et sont configurés pour être inclinés indépendamment les uns des autres autour d'un huitième axe (J) transversal audit premier axe (Y) ;
lesdits septièmes axes (F, G) étant interposés entre lesdits deuxièmes axes (B, C) desdits premiers rotors (20a, 20b) et entre lesdits quatrièmes axes (D, E) le long dudit sixième axe (X), lorsque ledit aéronef convertible (1, 1', 1") est dans ladite deuxième configuration ;
lesdits septièmes axes (F, G) étant agencés derrière lesdits deuxièmes axes (B, C) desdits premiers rotors (20a, 20b) et, par rapport à ladite direction normale vers l'avant dudit aéronef convertible (1, 1', 1") et lorsque ledit aéronef convertible (1, 1', 1") est dans ladite deuxième configuration ;
ledit aéronef convertible (1, 1', 1") comprenant en outre :
- une paire de plans de queue (8) faisant saillie, en porte-à-faux, dudit fuselage (2) au niveau de ladite queue (5) ;
chaque plan de queue (8) comprenant, respectivement :
- une première partie racine (50) fixée audit fuselage (2) dudit aéronef convertible (1, 1', 1") ; et
- une première partie d'extrémité d'aile (51) qui est configurée pour être inclinée par rapport à ladite première partie racine (50) autour dudit huitième axe (J), et supportant respectivement l'un desdits troisièmes rotors (22a, 22b) étant configuré pour être incliné autour dudit huitième axe (J) ; et
- une ailette de queue (7) comprenant un premier bord d'extrémité d'aile (100) et un deuxième bord d'extrémité d'aile (101) opposés l'un à l'autre ;
ledit premier bord d'extrémité d'aile (100) étant agencé au niveau de ladite queue (5) ; lesdits plans de queue (8) faisant saillie, en porte-à-faux, à partir dudit premier bord d'extrémité d'aile (100) ;
dans lequel chaque dit plan de queue (8) comprend :
- une autre première zone d'aile (62a, 62b) définissant une extrémité d'aile libre (52) dudit plan de queue (8) ;
- une deuxième zone d'aile (72a, 72b) ; et
- une deuxième nacelle (40a, 40b) logeant un moteur supplémentaire (32a, 32b) respectif et supportant le troisième rotor (22a, 22b) correspondant ;
ladite deuxième nacelle (40a, 40b) étant interposée entre ladite autre première zone d'aile (62a, 62b) et ladite deuxième zone d'aile (72a, 72b) le long dudit troisième axe (H ; J).

2. Aéronef convertible selon la revendication 1, dans lequel ladite demi-aile (3) comprend, à son tour :
- une deuxième partie racine (50) fixée audit fuselage (2) dudit aéronef convertible (1, 1', 1") ; et
- une deuxième partie d'extrémité d'aile (51) configurée pour être inclinée par rapport à ladite partie racine (50) autour dudit troisième axe (H) et supportant ledit premier rotor (20a, 20b) respectif ;
chaque dite première zone d'aile (60a, 60b ; 70a, 70b) étant définie par ladite deuxième partie d'extrémité d'aile (51) de ladite demi-aile (3) respective.

3. Aéronef convertible selon la revendication 1 ou 2, dans lequel lesdits deuxièmes axes (B, C), septièmes axes (F, G) et quatrième axes (D, E) sont agencés au-dessus dudit fuselage (2) lorsque ledit aéronef convertible (1, 1', 1") est dans ladite première configuration ; et/ou
dans lequel lesdits quatrièmes axes (D, E) sont agencés au-dessus desdits deuxièmes axes (B, C) et desdits septièmes axes (F, G) lorsque ledit aéronef convertible (1, 1', 1") est dans ladite première configuration.

4. Aéronef convertible selon la revendication 3, comprenant en outre un stabilisateur (120') agencé au niveau dudit deuxième bord d'extrémité d'aile (101) de ladite ailette de queue (7) ; et/ou
dans lequel lesdites deuxièmes parties d'extrémité d'aile (51) desdits plans de queue (8) sont configurées pour être inclinées conjointement par rapport audit fuselage (2) autour dudit huitième axe (J).

5. Aéronef convertible selon l'une quelconque des revendications précédentes, dans lequel lesdites premières zones d'aile (60a, 60b ; 61a ; 62 ; 70a, 70b) sont configurées pour être inclinées autour dudit troisième axe (H ; L ; J) d'un angle compris entre moins vingt et cent dix degrés.

6. Aéronef convertible selon la revendication 5, dans lequel lesdites première et deuxième zones d'aile (60a, 70a ; 60b, 70b ; 62a, 62b ; 72a, 72b) peuvent être inclinées conjointement autour dudit troisième axe (H ; J).

7. Aéronef convertible selon l'une quelconque des revendications précédentes, comprenant en outre :
- une pluralité d'actionneurs (90a, 90b, 91a, 91b, 92a, 92b) qui sont connectés opérationnellement auxdits premier, deuxième et troisième rotors (20a, 20b ; 21a, 21b ; 22a, 22b) respectifs, et qui sont configurés pour fonctionner pour déterminer l'inclinaison des premiers axes (B, C), quatrièmes axes (D, E) et huitièmes axes (F, G) respectifs autour du troisième, cinquième et septième axes (H ; J ; L) ; et
- une unité de commande (35) qui est programmée pour recevoir en entrée un premier signal associé à une manœuvre souhaitée dudit aéronef convertible (1, 1', 1''), un deuxième signal associé à une éventuelle panne de l'un des premiers, deuxième et troisième rotors (20a, 20b ; 21a, 21b ; 22a, 22b) et un troisième signal associé à une éventuelle panne d'au moins un desdits actionneurs (90a, 90b, 91a, 91b, 92a, 92b) ;
ladite unité de commande (35) étant programmée pour générer à sa sortie des signaux de commande respectifs pour lesdits premier, deuxième et troisième moteurs (30a, 30b ; 31a, 31b ; 32a, 32b) encore en fonctionnement et pour lesdits actionneurs (90a, 90b, 91a, 91b, 92a, 92b) encore en fonctionnement, sur la base dudit premier, deuxième, et troisième signaux afin d'exécuter ladite manœuvre.

8. Aéronef convertible selon la revendication 7, lorsqu'il dépend de la revendication 2, dans lequel ladite unité de commande (35) est configurée pour être programmée en cas de défaillance de tous lesdits premier, deuxième, et de troisièmes moteurs (30a, 30b ; 31a, 31b ; 32a, 32b) dans ladite première configuration et si ledit premier signal est associé à une variation de l'angle de lacet dudit aéronef convertible (1, 1', 1") par rapport à un neuvième axe (Z) orthogonal auxdits premier et sixième axes (Y, X) pour :
- la commande d'un premier (90a, 90b) desdits actionneurs (90a, 90b, 91a, 91b, 92a, 92b) pour incliner ladite deuxième partie d'extrémité d'aile (51) de l'une desdites demi-ailes (3, 8) d'un troisième angle autour dudit troisième axe (H, J), de manière à générer une première valeur de résistance aérodynamique (R1, R3) ; et
- la commande d'un deuxième (91a, 91b) desdits actionneurs (90a, 90b, 91a, 91b, 92a, 92b) pour incliner ladite deuxième partie (51) de l'autre desdites demi-ailes (3, 8) d'un deuxième angle, qui est différent dudit premier angle, autour dudit troisième axe (H, J), de manière à générer une deuxième valeur de résistance aérodynamique (R2, R4), qui est différente de la première valeur de résistance aérodynamique (R1, R3), sur ledit aéronef convertible (1, 1', 1") ;
ledit fuselage (2) étant interposé entre ladite une et l'autre desdites demi-ailes (3, 8) selon ledit sixième axe (X).

9. Aéronef convertible selon la revendication 7 ou 8, lorsqu'elle dépend de la revendication 6, dans lequel ladite unité de commande (35) est configurée pour être programmée dans le cas où ledit aéronef convertible (1, 1', 1") est dans ladite première configuration et si ledit premier signal est associé à une variation de l'angle de calage dudit aéronef convertible (1, 1', 1") par rapport audit sixième axe (X) pour :
- la commande d'un troisième (92a, 92b) desdits actionneurs (90a, 90b, 91a, 91b, 92a, 92b) pour incliner ladite deuxième partie d'extrémité d'aile (51) desdits plans de queue (9) autour dudit huitième axe (J) de manière à augmenter/diminuer les valeurs de levage négatives (L5 ; L6) respectives générées ; et/ou
dans lequel ladite unité de commande (35) est configurée pour être programmée dans le cas où ledit aéronef convertible (1, 1', 1") est dans ladite première configuration et si ledit premier signal est associé à une variation de l'angle de roulis dudit aéronef convertible (1, 1', 1") par rapport audit premier axe (Y) pour :
- la commande d'un quatrième (90a) desdits actionneurs (90a, 90b, 90c, 90d, 90e, 90f) pour incliner l'une desdites premières zones d'aile (60a, 70a) autour d'un neuvième axe (H) de manière à augmenter/diminuer la première valeur de levage (L1) respective générée ; et
- la commande d'un cinquième (90b) desdits actionneurs (90a, 90b, 90c, 90d, 90e, 90f) pour incliner l'autre desdites premières zones d'aile (60b, 70b) autour dudit axe (H) de manière à réduire/diminuer la valeur de levage (L2) respective générée ;
les mêmes dites demi-ailes (3) comportant lesdites une et l'autre desdites zones d'aile (60a, 70a ; 60b, 70b).
